# EUROPÄISCHE PATENTSCHRIFT

(11) **EP 2 692 017 B1**
(45) Veröffentlichungstag und Bekanntmachung des Hinweises auf die Patenterteilung: **12.08.2015**
(21) Anmeldenummer: 12710132.7
(22) Anmeldetag: 29.02.2012
(51) Int. Cl.: H01Q 3/30, H01Q 1/24, H04W 88/08, H01Q 3/00

(54) **MULTI-STRAHLFORM-ZUSATZEINRICHTUNG**
MULTI-BEAM SHAPE SUPPLEMENTARY DEVICE
DISPOSITIF ADDITIONNEL POUR FORMAGE DE FAISCEAUX MULTIPLES

(30) Priorität: 30.03.2011 DE 102011015551
(43) Veröffentlichungstag der Anmeldung: 05.02.2014
(73) Patentinhaber: Kathrein-Werke KG, 83022 Rosenheim (DE)
(72) Erfinder: ZIMMERMANN, Lars, 83101 Rohrdorf (DE); BIEN, Benjamin, 83022 Rosenheim (DE); MOHR, Markus, 83022 Rosenheim (DE); HOFFMANN, Tobias, 83098 Brannenburg (DE)
(74) Vertreter: Flach, Dieter Rolf Paul
(86) Internationale Anmeldenummer: PCT/EP2012/000875
(87) Internationale Veröffentlichungsnummer: WO 2012/130367

(56) Entgegenhaltungen:
- WO-A1-2010/146471
- WO-A2-2009/102775
- WO-A2-2011/047322
- GB-A- 2 468 730
- US-A1- 2005 105 552
- US-A1- 2010 113 097
- US-A1- 2011 237 315

## Beschreibung

Die Erfindung betrifft eine Multi-Strahlform-Zusatzeinrichtung nach dem Oberbegriff des Anspruches 1 sowie eine Einrichtung, die eine Multi-Strahlform-Steuerungseinrichtung und diese Multi-Strahlform-Zusatzeinrichtung umfasst.

Strahlform-Steuerungseinrichtungen werden insbesondere in der Mobilfunktechnik eingesetzt, d.h. bei Mobilfunkbasisstationen, um die Hauptquelle einer Mobilfunkantenne bezüglich ihres Abstrahlwinkels unterschiedlich einzustellen. In Abhängigkeit des Absenkwinkels (der üblicherweise auch "Down Tilt" genannt wird), kann eine betreffende Mobilfunkzelle unterschiedlich groß ausgeleuchtet und damit eingestellt werden.

Bei derartigen Strahlform-Steuerungseinrichtungen wird üblicherweise von einer RET-Einheit gesprochen, d.h. einer sogenannten "remote electrical tilt"-Einrichtung, wie sie beispielsweise aus der WO 02/061877 A2 bekannt ist. Mittels einer derartigen Strahlformeinrichtung, die wie bereits erwähnt bevorzugt als Multi-Strahlform-Steuerungseinrichtung bezeichnet wird, kann aber nicht nur beispielsweise durch unterschiedliche Einstellungen von Phasenschiebern ein unterschiedlicher Down-Tilt-Winkel in Elevationsrichtung eingestellt werden, sondern es kann auch insbesondere bei einem Antennenarray mit mehreren Spalten, beispielsweise unter Verwendung von Phasenschiebern, die Hauptstrahlrichtung und damit die Hauptquelle einer Antennenanlage in Horizontalrichtung, also mit unterschiedlichem Azimutwinkel, eingestellt werden. Schließlich kann mittels einer Strahlform-Steuerungseinrichtung nicht nur eine unterschiedliche Ausrichtung der Hauptstrahlrichtung einer Antennenanlage in Elevationsrichtung und/oder in Azimutrichtung eingestellt werden, sondern es kann auch die Strahlbreite sowohl in Azimut- wie in Elevationsrichtung unterschiedlich eingestellt werden, um also hier die Halbwertsbreite einer Hauptstrahlkeule unterschiedlich einstellen zu können (half power beam width). Ebenso ist es auch möglich, Einstellungen für die mechanischen Winkel einer Antenne, nämlich Roll, Nick und Gier ("roll", "pitch", "yaw") vorzunehmen.

Mit anderen Worten sind die vorbekannten Antennen in der Regel so ausgeführt, dass an einer dafür vorgesehenen mechanischen Schnittstelle (beispielsweise am unteren Montageflansch des Antennengehäuses) die sogenannte RET-Einheit installiert werden kann, die neben einer Elektronik auch einen Motor umfasst, welcher über eine mechanische Umsetzung die in der Antenne integrierten Phasenschieber ansteuert. Die somit erreichte Phasenänderung wirkt sich direkt auf die Strahlcharakteristik, z.B. auf den Down- Tilt-Winkel der Antenne aus.

Mittels derartiger RET-Einheiten kann grundsätzlich die Strahlcharakteristik von Multi-Antennenanlagen unterschiedlich eingestellt werden, wobei die erwähnten RET-Motoren zur Einstellung der Hauptstrahlrichtung der Antenne nicht nur in Vertikalrichtung (also in Elevationsrichtung zur Einstellung eines unterschiedlichen Down-Tilt Winkels), sondern auch in Horizontalrichtung (also in Azimutrichtung) wie aber auch zur Einstellung der Halbwertsbreite einer Hauptkeule verwendet werden können.

Dabei ist es grundsätzlich bekannt, dass die Steuerungseinheit die sogenannte RET-Einheit mit dem zugehörigen Motor innerhalb der Antennenanordnung, d.h. also innerhalb des Radoms, angeordnet werden kann. Gemäß der WO 02/061877 A2 ist demgegenüber vorgeschlagen worden, eine derartige RET-Einheit außerhalb des Radoms, bevorzugt direkt unterhalb eines Montageflansches der Antennenordnung, anzubauen, was den Vorteil aufweist, dass eine derartige RET-Einheit auch ohne Öffnen der Antennenabdeckung (Radom) nachgerüstet werden kann.

Bedingt durch Site-Sharing-Szenarien (bei welcher sich Netzbetreiber einen Standort teilen) sowie bei sogenannten Co-Siting-Szenarien (bei denen ein Netzbetreiber an einem Standort mehrere Basisstationen gegebenenfalls unterschiedlicher Mobilfunkgenerationen bzw. Mobilfunktechnologien betreibt) wird zunehmend eine höhere Anzahl von Antennen je Standort installiert. Spätestens seit Einführung von UMTS wird eine Großzahl der installierten Antennen durch ein System ergänzt, welches es letztendlich ermöglicht, die Strahlcharakteristik der Antennen elektrisch zu steuern. Dabei handelt es sich um die vorstehend beschriebene RET-Konfiguration, mit der ein Absenkwinkel ferngesteuert unterschiedlich einstellbar ist.

In der Regel haben die diversen Antennenhersteller dafür eigene, d.h. proprietäre mechanische Schnittstellen geschaffen, wodurch auch die jeweiligen Ausführungen von sogenannten Single- oder Multi-Strahlformeinrichtungen (Aktuatoren) von Hersteller zu Hersteller variieren.

Die Ansteuerungsseite der RET-Aktuatoren ist im AISG bzw. 3GPP Standard spezifiziert. Somit können mit einem Steuergerät die RET-Aktuatoren verschiedener Antennenhersteller über diese standardisierte Schnittstelle angesteuert werden. Um die Single- und Multi-RET- Aktuatoren im Standard abzudecken wurden hierfür die zwei Gerätetypen "Single-RET (device type 0x01) und "Multi -RET (device type 0x11) spezifiziert.

Eine mögliche Umsetzung einer Multi-RET ist z.B. in einem einzigen Gehäuse untergebracht, welches mehrfach mit den herstellerspezifischen mechanischen Schnittstellen ausgestattet ist. Die Multi-RET kann dann, nach Montage an einer entsprechenden Multi-Band-Antenne, angesteuert über ein Steuergerät, die Strahlcharakteristika der einzelnen Bänder steuern. Die Ausführungsform ist jedoch nur dann möglich bzw. sinnvoll, wenn die mehrfach mechanischen Schnittstellen an der Antenne es erlauben, diese mit einem einzigen Gerät bedienen zu können.

Bei Multi-Band-Antennen anderer Hersteller ist eine solche Multi-RET-Lösung in einem einzigen Gehäuse nicht unbedingt realisierbar, was an den unterschiedlichen Ausführungen der mechanischen Schnittstellen liegt. Besagte Schnittstellen können sich zudem je nach Antennentyp gegebenenfalls an unterschiedlichen Stellen befinden.

Aus der WO 2009/102775 A2 ist beispielsweise eine Multi-Strahlformeinrichtung in Form einer Multi-RET-Einrichtung bekannt geworden, die über drei manuell betätigbare Einstellachsen verfügt, um darüber beispielsweise drei getrennte Antennenarrays ansteuern zu können. Zur Vereinfachung des gesamten Aufbaus wird vorgeschlagen, eine gemeinsame Steuerungseinrichtung für alle drei Strahlformeinrichtungen zu verwenden. Offenbart wird also in dieser Vorveröffentlichung eine Multi-Band-Antenne mit einer Basisstation für mehreren einschaltbaren Strahlereinrichtungen, die eine gemeinsame Steuerungseinrichtung für alle Strahlform-Einrichtungen aufweist. Diese empfängt die Steuersignale von einer beispielsweise in der Basisstation integrierten Fernsteuereinheit. Dabei sind bei der Steuerungseinrichtung sowohl eine achtpolige Konnektoreinrichtung mit weiblicher, als auch eine achtpolige Konnektoreinrichtung mit männlicher Konnektor-Konfiguration vorgesehen.

Ferner ist aus der WO 2009/102774 A2 ebenfalls eine Multi-Strahlform-Steuerungseinrichtung bekannt geworden, die entsprechende Eingangs- und Ausgangsachsen zur Ansteuerung der Antenneneinrichtung aufweist. Hier ist eine Möglichkeit vorgeschlagen worden, den Gleichstrommotor der Antriebseinrichtung von dem Phasenschieber-Einstellschaft abzukoppeln, um auf leichtere Weise die Phasenschieber- Steuerungsknöpfe manuell bedienen zu können.

Multi-Band-Antennen werden somit je Band mit den bereits genannten "Single-RET-Aktuatoren" bestückt. Die Möglichkeit zur Kostenreduzierung des Systems "Antenne+RET", wie sie der Hersteller einer "Multi-RET" (welche in einem einzigen Gehäuse realisiert werden kann) hat, kann somit nicht von jedem Antennenhersteller genutzt werden.

Aus der Veröffentlichung "Lumberg: 03 - Rundsteckverbinder mit Schraubverschluss nach IEC 60130-9, IP 40/IP 68. 12/ 2009. URL: http://www.lumberg.com/main/download/zusatzinfo/Uebersicht_03.pdf [abgerufen am 30.12.2011]" sind unter anderem Steckverbindungen als bekannt zu entnehmen, die für unterschiedliche Einsatzzwecke verwendet werden können. Unter anderem ist auf Seite 5 oben rechts eine Übersicht über Rundsteckverbinder mit Schraubverschluss wiedergegeben. Einige dieser Steckverbindungseinrichtungen weisen einen mit einer männlichen Steckkonfiguration versehenen Anschluss und drei mit einer weiblichen Steckerkonfiguration versehene weitere Steckverbindungseinrichtungen auf. Dabei handelt es sich beispielsweise um einen Gleichstrom-Power-(DC-Power-) und Control-Signal-Splitter, bei welchem letztlich ein AISG-Protokoll konformer Anschluss auf zum Beispiel drei Anschlüsse aufgeteilt werden kann. In der Regel werden hier die entsprechenden Pins/ Stecker miteinander verbunden, so dass die erwähnten drei Ausgänge parallel zueinander geschaltet werden.

Die weit verbreitete AISG-Norm ist beispielsweise aus der Veröffentlichung "Norm AISG v2.0: 1.06.2006, Control interface for antenna line device" als bekannt zu entnehmen, wobei hier beispielsweise unter Ziffer 6.3.2. "Polarity of multi-pole connectors" ausgeführt ist, dass diese Multi-Pol-Konnektor-Kollektoren einen Sockel mit einer weiblichen Konnektor-Konfiguration und einen Eingangssockel mit einer männlichen Konnektor-Konfiguration und optional einen zweiten Ausgangs-Sockel mit einer weiblichen Konnektor-Konfiguration umfassen können.

Schließlich wird auf die EP 2 340 683 B1 und die WO 2010/146471 A1 verwiesen.

In der US 2010/0113097 A1 ist eine Antennen-Übertragungs-Steuerungseinrichtung mit einer Basisstation-Multiplexer-Schaltung zum einen sowie eine Antennensystem-Multiplexer-Schaltung zum anderen beschrieben. Dabei handelt es sich um eine sogenannte "intelligente Multiplexer-Schaltung", die je nach Anforderung in der Form eines Diplexers, Triplexers, also allgemein in Form eines Multiplexers, konzipiert sein kann, je nachdem wie viele Basisstationen und zugehörige Antenneneinrichtungen gemeinschaftlich unter Ausnutzung einer gemeinsamen Feeder-Struktur eingesetzt werden sollen. Die Multiplexer-Struktur auf der Basisstationsseite scannt dabei auf der der Basisstation zugehörigen Anschlussseite, ob von der betreffenden BAsisstation beispielsweise eine oder mehrere AISG-Protokolle, ein oder mehrere 3GPP-Protokolle und/oder gegebenenfalls nur ein oder mehrere Gleichstromsignale (DC-Signale) ohne ein entsprechendes Protokoll übertragen werden.

In der erwähnten WO 2010/146471 A1 ist ein System als bekannt zu entnehmen, um bei einer Telekommunikations-Antenneneinrichtung entsprechende Daten gemäß dem AISG-Standard oder dem 3GPP-Standard zu übertragen. Dabei wird eine Struktur vorgeschlagen und verwendet, die ein Antennenmodul umfasst, welches über einen Master-Microkontroller mit einer Reihe von Slave-Microkontrollern in Verbindung steht.

Vor diesem Hintergrund ist es Aufgabe der vorliegenden Erfindung, eine verbesserte Antenneneinrichtung (insbesondere eine Basisstation) mit einer Multi-StrahlFormeinrichtung, also einer sogenannten Multi-RET-Anordnung, zu schaffen, die beispielsweise in einem Gehäuse untergebracht ist, und die neben dem üblichen Betrieb auch einen sogenannten Site-Sharing-Betrieb ermöglicht. Mit anderen Worten soll eine derartige Antenne mittels einer Multi-RET-Einheit beispielsweise auch von zwei oder mehreren Netzbetreibern unabhängig voneinander genutzt werden können, so dass die beiden oder mehreren Netzbetreiber unabhängig voneinander unterschiedliche strahlcharakteristische Einstellungen für die ihnen zugeordneten Frequenzbänder an der Antenne vornehmen (beispielsweise einen unterschiedlichen Down-Tilt-Winkel einstellen) können. Das gilt gleichermaßen auch für den Fall, dass beispielsweise ein Netzbetreiber eine derartige Antenneneinrichtung über zwei oder mehrere unterschiedliche Basisstationen betreiben möchte.

Die Aufgabe wird erfindungsgemäß entsprechend den im Anspruch 1 angegebenen Merkmalen bezüglich einer Multi-Strahlform-Zusatzeinrichtung und entsprechend den im Anspruch 11 angegebenen Merkmalen bezüglich einer Einrichtung, die eine Multi-Strahlform-Steuerungseinrichtung und eine daran angeschlessene Multi-Strahlform-Zusatzeinrichtung umfasst, gelöst. Vorteilhafte Ausgestaltungen der Erfindung sind in den Unteransprüchen angegeben.

Durch die vorliegende Erfindung wird mit einfachsten Mitteln eine kostengünstige Möglichkeit zur Verbesserung einer Antenneneinrichtung im Allgemeinen und einer Mobilfunkantennenanlage (beispielsweise für eine Basisstation) im Besonderen geschaffen, beispielsweise in Form einer Zusatzeinrichtung, die so auszugestalten ist, dass die beispielsweise eine Dual- bis Hexa-Band-Antenne nicht nur von einem Netzbetreiber, sondern bei Bedarf auch von zwei oder mehreren Netzbetreibern oder über zwei oder mehrere Basisstationen eines Netzbetreibers unabhängig voneinander betrieben werden kann. Von daher wird insoweit auch allgemein nur davon gesprochen, dass im Rahmen der Erfindung eine entsprechende Antenneneinrichtung von zwei oder mehreren unabhängigen primären Steuergeräten, d.h. sogenannten Primaries betrieben werden kann, wobei ein primäres Steuergerät beispielsweise dem einen Netzbetreiber und das andere primäre Steuergerät dem anderen zweiten Netzbetreiber zugeordnet ist, oder ein Netzbetreiber die Antenne über zwei getrennte Primaries, die in zwei getrennten Basisstationen untergebracht sind, entsprechend betreiben kann. Unabhängig davon zeichnet sich die erfindungsgemäße Lösung durch ihre Einfachheit und durch ihre kostengünstige Realisierung aus.

Im Nachfolgenden wird anstelle des Kurzbegriffes "Primary" häufig auch von "Netzbetreiber" und/oder "primärem Steuergerät" gesprochen.

Im Rahmen der Erfindung wird von einer Multi-RET-Einheit ausgegangen, die üblicherweise eine primäre Kommunikationsschnittstelle, beispielsweise eine achtpolige Kommunikationsschnittstelle, mit einer Acht-Pin-Anschlusskonfiguration in Form eines sogenannten männlichen Steckers, aufweist. Sollen aber beispielsweise an einem Standort mehrere Antennen entsprechend angesteuert werden, so kann für eine zweite, dritte oder mehrere zusätzlich am selben Standort vorgesehene Antennen jeweils eine weitere, sogenannte sekundäre Kommunikationsschnittstelle vorgesehen sein, worüber eine Verkettung mit einer nachfolgenden Antenne durchgeführt werden kann, nämlich in Form einer sogenannten Daisy-Chain-Verbindung (Daisy-Chaining). Diese zweite zu einer nächsten Antenneneinrichtung bzw. zu einer nächsten RET-Einheit führenden Kommunikationsschnittstelle kann dabei ebenfalls vom Grundsatz her gleich wie die erste Kommunikationsstelle aufgebaut sein, allerdings in der Regel dann als weibliche Steckereinrichtung, wenn die erste Kommunikationsschnittstelle als männliche Steckereinrichtung ausgebildet ist (oder umgekehrt).

Soll eine derartige Antenneneinrichtung nunmehr von zwei Netzbetreibern/primären Steuergeräten (Pimaries) oder über zwei unterschiedliche Basistationen eines oder mehrerer Netzbetreiber völlig unabhängig voneinander betrieben werden, kann eine leichte Änderung der Konfiguration im Rahmen der Erfindung dadurch gewährleistet werden, dass beispielsweise an der zweiten für die Daisy-Chain-Verkabelung vorgesehenen Kommunikationsschnittstelle ein Adapter aufsetzbar ist, wodurch die Anschlusskonfiguration von "weiblicher Steckereinrichtung" in "männliche Steckereinrichtung" geändert wird, also dann eine gleiche Stecker-Anschlusskonfiguration vorliegt, wie an der ersten Kommunikationsschnittstelle. Erfindungsgemäß ist also ein sogenannter Site-Sharing-Adapter bzw. eine entsprechende Site-Sharing-Adaptereinrichtung vorgesehen, über die nunmehr mehrere, d.h. zumindest zwei und vorzugsweise drei weitere primäre Kommunikationsschnittstellen bereit gestellt werden, an welchen somit mehrere zusätzliche Netzbetreiber oder zumindest allgemein mehrere zusätzliche Primaries, also zumindest zwei oder drei zusätzliche Primaries die Antenne betreiben können, sich also eine gemeinsame Antennenanordhung mit anderen Netzbetreibern/ Primaries teilen.

Die erwähnte Site-Sharing-Adapteranordnung umfasst also in einer bevorzugten Ausführungsform der Erfindung, wie vorstehend erläutert, eine nachfolgend auch kurz als Sekundär-Adapter bezeichnete Adaptereinrichtung, die an der oben erwähnten sekundären Kommunikationsschnittstelle - die eigentlich zur Herbeiführung einer Daisy-Chain-Verkettung mit einer nachfolgenden Antenneneinrichtung vorgesehen ist - aufgesetzt oder allgemein angeschlossen werden kann, und die eine entsprechende Konnektor-Konfiguration dieser sekundären Kommunikationsschnittstelle in eine Konnektor-Konfiguration zum Anschluss weiterer Netzbetreiber/primärer Steuergeräte ändert.

Alternativ zu dem oben erwähnten Sekundär-Adapter oder ergänzend zu dem vorstehend erwähnten Sekundär-Adapter kann die Site-Sharing-Adapteranordnung auch einen anders ausgebildeten oder zusätzlich vorgesehenen weiteren Adapter umfassen, nämlich eine nachfolgend kurz als Primär-Adapter bezeichnete Adaptereinrichtung, die auf der primären Kommunikationsschnittstelle der Antenneneinrichtung aufsetz- bzw. anschließbar ist. Bei diesem Primär-Adapter handelt es sich ebenfalls um einen eine Verzweigung ermöglichenden Adapter, der mit seiner einen Anschlussstelle in dieser Ausführungsform an der primären Kommunikationsschnittstelle der Antenne aufsetzbar und anschließbar ist und gegenüberliegend dazu zumindest zwei Kommunikationsschnittstellen bereitstellt, an denen nunmehr die entsprechenden Anschlusskabel mehrerer weiterer, insbesondere zumindest zweier oder vorzugsweise dreier weiterer unterschiedlicher, d.h. separater Netzbetreiber bzw. Primaries anschließbar sind. Auch hierdurch wird es möglich an einer Antenneneinrichtung sicherzustellen, dass ohne große zusätzliche Maßnahmen diese Antenneneinrichtung nunmehr von zumindest zwei Netzbetreibern gemeinsam betrieben und genutzt werden kann.

Der erwähnte Site-Sharing-Adapter ermöglicht also den Anschluss von mehr als einer Primary, beispielsweise von zwei oder drei Primaries an einer Multi-RET. Diese Primaries können dann unabhängig voneinander die Strahlcharakteristika der ihnen zugeordneten Frequenzbänder einer Multiband-Antenne ein- bzw. verstellen.

Bevorzugt ist dabei vorgesehen, dass diese Unabhängigkeit sowohl in der Kommunikation zwischen den primären Steuergeräten und der Multi-RET als auch in der individuellen Leistungsversorgung erreicht wird. D.h., dass dann - wenn ein primäres Steuergerät beispielsweise eine Verstellung der Phasenschieber anstößt - die dafür benötigte Leistung zuordnungsrichtig dieser Primary oder einer dieser Primary physikalisch zugeordneten Leistungsquelle entnommen werden soll, also einem primären Steuergerät oder einer diesem primären Steuergerät physikalisch zugeordneten Leistungsquelle.

In einer bevorzugten Ausführungsform ist dabei vorgesehen, dass in einem Stand-by-Modus (idle-mode) die sogenannte Stand-by-Leistung der Multi-RET über jeden physikalischen Anschluss abgedeckt werden kann. Dies wird bevorzugt durch eine ODER-Schaltung realisiert, die sicherstellt, dass die zumindest von einer Primary zur Verfügung gestellte Energieversorgung an die Multi-RET und an weitere vorgesehene elektronische Komponenten und Baugruppen weitergegeben wird. Möglich ist dabei auch, dass die beispielsweise im Site-Sharing-Adapter über einen Sternpunkt zusammengeführte Versorgungsspannung über einen Abwärtswandler auf eine Spannung gewandelt wird, welche niedriger ist als alle anliegenden Eingangsspannungen.

In dem von dem Stand-by-Betrieb zu unterscheidenden Aktiv-Betrieb sind bevorzugt ergänzende Maßnahmen vorgesehen. Der Aktiv-Betrieb unterscheidet sich hier vom Stand- by-Betrieb dadurch, dass zu der Stand-by-Leistungsversorgung der in der Multi-RET verbauten Elektronik zusätzlich ein oder mehrere Aktuatoren betrieben werden können. Die Leistungsaufnahme dieser Aktuatoren kann sich deutlich von der Stand-by-Leistung abheben, wodurch eine quasi willkürliche Leistungsaufnahme von einer x-beliebigen, angeschlossenen Primary nicht mehr toleriert werden kann. Von daher ist bevorzugt eine Elektronik in dem Site-Sharing-Adapter vorgesehen, die die für den Aktiv- Leistungsbetrieb benötigte Stromversorgung von jedem primären Steuergerät bezieht, welches eine entsprechende Strahlformung über die Multi-RET anstößt und durchführen will.

Im Gegensatz zur bisherigen Lösung bietet der erfindungsgemäß vorgesehene Site-Sharing-Adapter als Multi-Strahlform-Zusatzeinrichtung den wesentlichen Vorteil, dass eine Antenne, insbesondere eine Mobilfunkantenne (für eine Basisstation) bzw. eine in diesem Sinn verwendete Multi- RET-Einheit kostengünstig für den Einzelbetrieb hergestellt und verwendet werden kann, und dass nur geringfügige Zusatzmaßnahmen benötigt werden, nämlich in Form eines erwähnten Site-Sharing-Adapters, um die Antenne unter Verwendung dieses Site-Sharing-Adapters dann problemlos auch von zwei, drei oder mehreren Netzbetreibern unabhängig voneinander in einem sogenannten Site-Sharing-Modus betreiben zu können. D.h., nur dann, wenn wirklich mehrere Primaries/Netzwerkbetreiber sich eine Antennenanlage teilen, fallen die durch den Site-Sharing-Adapter zusätzlich verursachten Kosten an.

Die Erfindung wird nachfolgend anhand von Zeichnungen näher erläutert. Dabei zeigen im Einzelnen:
- Figur 1a:: eine schematische Prinzipdarstellung einer erfindungsgemäßen Multi-RET-Einheit, wie sie an der Unterseite einer nur auszugweise strichliert angedeuteten Antenneneinrichtung angebaut ist;
- Figur 1b:: eine entsprechende Darstellung zu Figur 1a mit einer leicht abgewandelten Multi- RET- Einheit;
- Figur 2:: eine schematische Draufsicht auf eine primäre und eine sekundäre Kommunikationsschnittstelle an der in Figur 1a bzw. 1b vorgesehenen Multi-RET-Einheit;
- Figur 3:: eine schematische Ansicht einer Multi-RET-Einheit mit angeschlossenem Site-Sharing-Adapter in Form eines Sekundär-Adapters;
- Figur 4:: eine entsprechende Darstellung zu Figur 3, jedoch unter Verwendung eines Primär-Adapters als Site-Sharing-Adapter;
- Figur 5a:: eine differenziertere Darstellung einer Multi-RET-Einheit;
- Figur 5b:: eine detailliertere Darstellung eines ersten erfindungsgemäßen Ausführungsbeispieles eines Primär- oder Sekundär-Adapters mit zwei vorgesehenen Primary-Anschlüssen;
- Figur 6a:: ein Ausführungsbeispiel für eine gegenüber Figur 5a leicht abgewandelte Multi-RET- Einheit;
- Figur 6b:: eine detaillierte Darstellung eines ersten erfindungsgemäßen Ausführungsbeispiels eines Primär- oder Sekundär-Adapters mit zwei vorgesehenen Primary-Anschlüssen;
- Figur 6c:: eine detaillierte Darstellung eines ersten erfindungsgemäßen Ausführungsbeispiels eines Primär- oder Sekundär-Adapters mit drei vorgesehenen Primary-Anschlüssen;
- Figur 7:: ein weiteres Ausführungsbeispiel in Abweichung zu Figur 5b unter Verwendung eines Primär- oder Sekundär-Adapters, an welchem drei Primaries anschließbar sind;
- Figur 8:: eine Darstellung wie ein Primär-Adapter an einem primären Anschluss einer Multi-RET- Einheit unter Sperrung des Sekundär-Anschlusses anschließbar ist; und
- Figur 9:: eine nochmalige Abwandlung gegenüber Figur 8 im Fall eines Primär-Adapters zum Anschluss von drei Primaries.

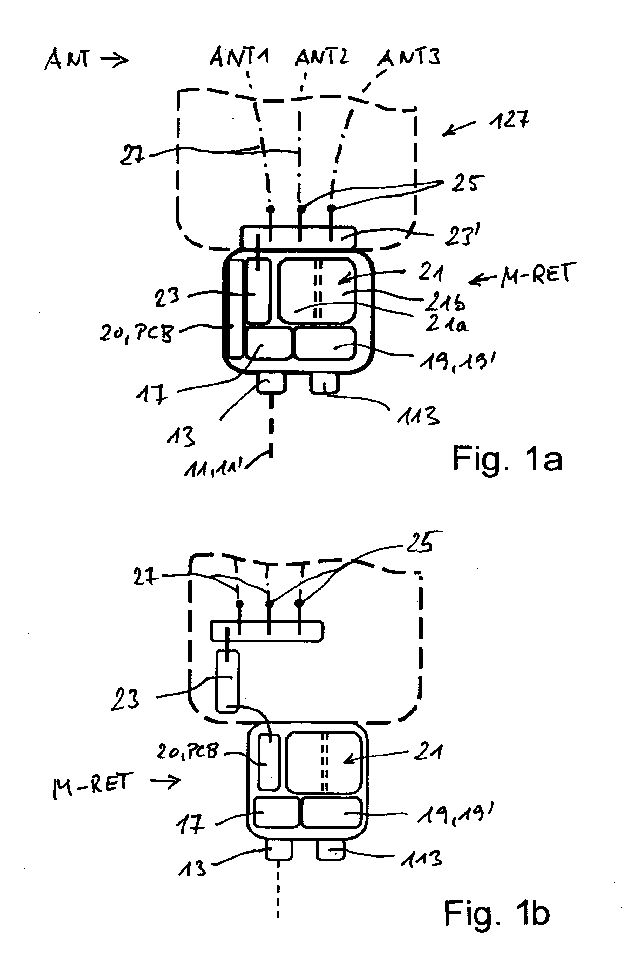

Bei dem Ausführungsbeispiel gemäß Figur 1a ist in schematischer Darstellung eine Gesamt-Antennenanordnung ANT gezeigt, die drei einzelne, ggf. integrierte Antenneneinrichtungen ANT1, ANT2 und ANT3 an einem Antennenstandort umfassen soll, die beispielsweise als separate Antenneneinrichtungen fungieren und dabei beispielsweise in drei unterschiedlichen Frequenzbändern Strahlen senden und/oder empfangen können.

In Figur 1a sind dabei die nachfolgend noch im Einzelnen erläuterten Anschlusskupplungen nur in ihrer abstrakten Lage angedeutet, ohne dass entsprechende Antennenelemente in Figur 1a eingezeichnet sind.

Für die getrennte Strahlabsenkung (Down-Tilt) und/oder für die Strahlausrichtung nicht nur in Elevationsrichtung, sondern auch in Horizontalrichtung und/oder für eine gegebenenfalls mögliche Strahlformung unter Einstellung einer unterschiedlichen Halbwertsbreite dieser drei Antenneneinrichtungen ANT1, ANT2 und ANT3 ist im gezeigten Ausführungsbeispiel eine Multi-Strahlformeinrichtung M-RET vorgesehen, die nachfolgend auch kurz als M-RET und/oder als Multi-Strahlform-Steuerungseinrichtung bezeichnet wird, da hierüber die Strahlformung gesteuert und ausgelöst wird. Ebenso ist es auch möglich, Einstellungen für die mechanischen Winkel einer Antenne, nämlich Roll, Nick und Gier ("roll", "pitch", "yaw") vorzunehmen. Ganz allgemein kann also im Rahmen der erfindungsgemäßen Multi-Strahlformeinrichtung eine in weiten Bereichen beliebige Strahlformung durchgeführt werden, so dass mit anderen Worten letztlich durch eine oder mehrere der vorstehend genannten Maßnahmen oder auch auf andere Art und Weise ein Strahlungsdiagramm einer entsprechenden Antenneneinrichtung, insbesondere eine Mobilfunk-Antenneneinrichtung entsprechend eingestellt und/oder verändert werden kann.

Diese Multi-Strahlform-Steuerungseinrichtung M-RET umfasst eine Kommunikationsschnittstelle 13, über die ein Kommunikationsbus 11 beispielsweise in Form eines entsprechenden (z.B. fünfadrigen oder achtadrigen) Kommunikationskabels 11' (in Figur 1 nur strichliert angedeutet) direkt oder mittelbar mit einem beispielsweise in einer Basisstation integrierten Steuergerät, allgemein mit einer sogenannten Primary, verbunden ist. Von daher wird nachfolgend anstelle von Primary auch von primärem Steuergerät gesprochen. Die Funktion eines sogenannten primären Steuergerätes (Primary) kann aber auch in Teilen einer Basisstation, wie z.B. in einer abgesetzten Einheit, wie einem Remote Radio Head, der auch kurz als RRH bezeichnet wird, integriert sein. Als Kommunikationsschnittstelle kann also (ähnlich wie beim Stand der Technik auch) beispielsweise ein AISG-Stecker- oder Steckverbinder dienen. Die erwähnte Primary, also allgemein die Basisstation oder beispielsweise ein in der Basisstation integriertes und nicht näher dargestelltes primäres Steuergerät, kann über ein geeignetes Protokoll, beispielsweise ein AISG2.0/3GPP-Protokoll mit der erwähnten Multi-Strahlformeinrichtung M-RET (device-type 0x11) kommunizieren. Findet die Kommunikation beispielsweise über das AISG1.1 Protokoll statt, so wird die M-RET auf mehrere Single-RET-Aktuatoren (device-type 0x01) abgebildet, da der Gerätetyp 0x11 in diesem Standard nicht definiert wurde. Diese erwähnte Kommunikationsschnittstelle 13 zum Anschluss eines primären Steuergerätes wird nachfolgend auch kurz als primäre Kommunikationsschnittstelle 13 bezeichnet.

Aus Figur 1a ist auch schematisch zu ersehen, dass die Multi-Strahlform-Steuerungseinrichtung unter anderem eine Elektronik 20, beispielsweise mit einer Platine PCB, eine Blitzschutzeinrichtung 17, eine Spannungsversorgungseinrichtung 19 (welche teilweise nachfolgend auch als internes Netzteil 19' bezeichnet wird), eine Mikroprozessoreinrichtung 21 mit zugehörigen Motortreibern sowie einen elektrischen Aktuator 23 (beispielsweise in Form eines Elektromotors, eines Schrittmotors, einer magnetisch betätigbaren Verstelleinrichtung etc.) umfasst, der mit einem zugehörigen mechanischen Abtrieb 23' mit mechanischen Schnittstellen 25 in Verbindung steht.

An den Kupplungsanordnungen 25 können dann nicht näher gezeigte Übertragungseinrichtungen 27 vorgesehen sein, die beispielsweise zu Phasenschiebereinrichtungen führen, um durch die entsprechende Steuerung der MultiStahlformeinrichtung zielgerichtet bestimmte Phasenschieber so zu verstellen, dass die darüber angesteuerten Strahler einer Antenneneinrichtung ANT1, ANT2 und/ oder ANT3 zielgerichtet und bei Bedarf mit einem unterschiedlichen Down-Tilt-Winkel eingestellt werden können. Ebenso können über die entsprechende Steuerungseinrichtung mit den nachfolgenden Aktuatoren 23 über die Kupplungsstellen 25 zielgerichtet unterschiedlich weitere Strahlform-Steuerungseinrichtungen bedient und eine entsprechende unterschiedliche Strahlformung der angeschlossenen Antennen bewirkt werden. Bei den erwähnten an den einzelnen Kupplungsstellen 25 anschließbaren bzw. angeschlossenen Übertragungseinrichtungen 27 handelt es sich insoweit um beliebig, auch unterschiedlich realisierbare Teile einer allgemein als Antennen-Stelleinrichtung 127 bezeichneten Maßnahme, um die erwähnten Antennen ANT1 bis ANT3 individuell und bei Bedarf unterschiedlich bezüglich ihrer Strahlkonfiguration einstellen zu können.

Nur der Vollständigkeit halber wird unter Bezugnahme auf Figur 1b erwähnt, dass die sogenannte Multi-RET-Einheit, wie sie anhand von Figur 1a beschrieben wurde, auch ohne eine entsprechende Antriebseinrichtung oder Motor, also ohne elektrischen Aktuator 23 ausgebildet sein kann, weil der entsprechende Aktuator, also die Antriebseinrichtung 23, wie anhand von Figur 1b ersichtlich ist, auch innerhalb der Antenneneinrichtung integriert sein kann, also innerhalb des Antennengehäuses (Radoms) untergebracht sein kann, um hierüber zielgerichtet die in der Antenne ebenfalls mit integrierter Getriebeeinrichtung 23', wie die angedeuteten Übertragungseinrichtungen 27 zur Einstellung der Strahlungseigenschaften (Down-Tilt) und deren einzelner Strahlerelemente zu verstellen. Insoweit sind weitere Abwandlungen möglich.

Ferner wird angemerkt, dass beispielsweise auch nur die Getriebeeinrichtung 23' mit den nachfolgenden Übertragungseinrichtungen 25, 27 im Antennengehäuse untergebracht sein kann und die Antriebseinrichtung 23 gegenbenenfalls noch in der Multi-RET-Einheit M-RET. Hier können beliebige Aufspaltungen oder Aufteilungen möglich sein.

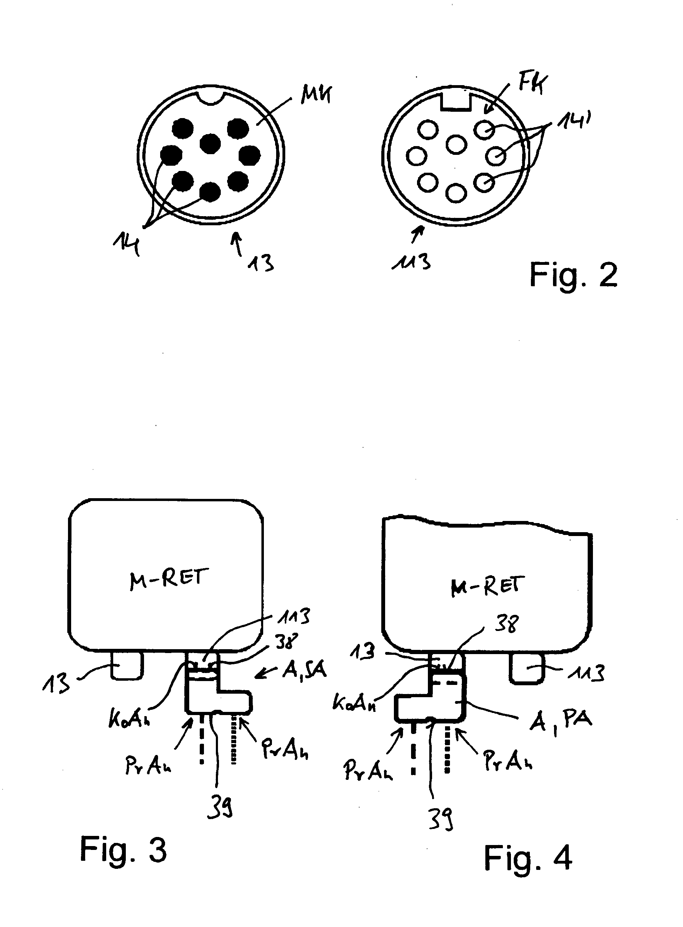

Bei der erwähnten ersten oder primären Kommunikationsschnittstelle 13 handelt es sich dabei in der Regel um einen männlichen Anschluss, der nachfolgend kurz auch als männlicher Konnektor oder "male"-Konnektor MK bezeichnet wird. Dieser "male"-Konnektor MK kann beispielsweise eine Multi-Pin-Steckeranordnung, beispielsweise eine achtpolige Multi-Pin-Steckeranordnung, umfassen, also mit einer Acht- Pin-Konfiguration (mit acht Stiften oder Pins 14, wie in Figur 2 gezeigt) ausgebildet sein. Derartige achtpolige AISG-Stecker kommen dabei häufig zum Einsatz, da über sie die betreffende RET-Einheit mit einem geeigneten Protokoll beispielsweise mit einem AISG-1.1, einem AISG-2.0 etc. betrieben werden kann.

Daneben ist - wie auch aus der in Figur 2 dargestellten auszugsweisen Draufsicht auf die Kommunikationsschnittstellen zu ersehen ist - eine zweite oder sekundäre Kommunikationsschnittstelle 113 vorgesehen, die gegensinnig zur ersten Kommunikationsschnittstelle 13 (die in Form eines männliches Konnektors MK ausgebildet ist) nach Art eines weiblichen oder "female"-Konnektors FK mit z.B. acht Buchsen 14' gebildet ist. Hierüber kann eine Daisy-Chain-Verbindung zu einer weiteren RET- oder Multi-RET-Einheit und damit zu einer weiteren nachgeordneten Antenneneinrichtung durchgeführt werden, um auch diese über die gemeinsame Kommunikationsverbindung 11, 11' zu steuern oder zu betreiben.

Eine derartige Antenne kann von einem einzelnen Netzbetreiber in üblicher Weise eingesetzt werden, und zwar als Einzel-Antenneneinrichtung oder über den zusätzlichen zweiten Kommunikationsanschluss FK zum Betrieb weiterer zusätzlicher Antenneneinrichtungen.

Da die erwähnte, anhand der Figuren 1a und 1b beschriebene Multi-RET in der Regel mit mindestens einer primären Steckverbindungsmöglichkeit in Form einer Buchse oder eines Steckers versehen ist, die nachfolgend auch als primärer oder sekundärer Kommunikationsanschluss bzw. Kommunikationsschnittstelle 13 bzw. 113 bezeichnet wird, kann an der primären Kommunkationsschnittstelle 13 in der Regel eine Primary angeschlossen werden. Sofern vorgesehen kann an der sekundären Kommunikationsschnittstelle 113 beispielsweise eine Verkettung zu einer oder weiteren Multi-RET-Einrichtungen oder eine Verkettung von dieser Multi-RET mit einer anderen systemtypischen Komponente wie zum Beispiel einer Single-RET durchgeführt werden.

Sollen aber nunmehr mehrere Primaries, insbesondere zumindest zwei oder vorzugsweise drei unabhängige Primaries an der Multi-RET angeschlossen werden, so wird dies im Rahmen der vorliegenden Erfindung in Form eines Site-Sharing-Adapters bewerkstelligt, der beispielsweise über vier primäre Anschlüsse verfügt. Der eine primäre Anschluss dient beispielsweise zum Anschluss an dem sekundären Kommunikationsanschluss der Multi-RET. An den verbleibenden drei primären Anschlüssen, die nachfolgend kurz als Primäranschlüsse PrAn bezeichnet werden, können die erwähnten zwei oder beispielsweise drei (oder allgemein mehreren) Primaries angeschlossen werden.

Wie aus Figur 3 zu entnehmen ist, ist es lediglich erforderlich, dass als Multi-Strahlform-Zusatzeinrichtung der erwähnte Site-Sharing-Adapter A mit seiner einen Anschlussseite 38 an der zweiten Kommunikationsstelle 113, also mit seinem Koppelanschluss KoAn an der für die Daisy- Chain-Verbindung vorgesehenen Adapterstelle aufgesetzt also angeschlossen wird. Ein derartiger Site-Sharing-Adapter A zeichnet sich zudem dadurch aus, dass er die vorgefundene Konnektor-Anschlusskonfiguration an der Kommunikationsschnittstelle 113 der M-RET-Einheit, die im vorliegenden Falle aus einem weiblichen oder "female"-Konnektor FK besteht, an seiner gegenüberliegenden freien Anschlussseite 39 in eine umgekehrte Konnektor-Konfiguration ändert, nämlich in eine männliche oder "male"-Konnektor-Konfiguration MK. Mit anderen Worten sind die beiden Anschlussseiten 38 und 39 des Adapters A, hier in Form eines sogenannten Site-Sharing-Adapters A, mit einer männlichen Konfiguration MK versehen. D.h., dass sowohl auf der Koppelseite 38 des sogenannten Koppelanschlusses KoAn des Site-Sharing-Adapters A als auch auf der gegenüberliegenden Anschlussseite 39 die hier in diesem Ausführungsbeispiel vorgesehenen beiden Primary-Anschlüsse PrAn mit der männlichen Konnektor-Konfiguration MK unter Verwendung von Pins/Stiften 14 versehen sind, wobei der Koppelanschluss KoAn auf der Koppelseite 38 auf die Sekundär-Kommunikationsschnittstelle 113 mit der weiblichen Konnektor-Konfiguration FK aufgesteckt werden kann.

Da der erwähnte Site-Sharing-Adapter A (allgemein die entsprechende Site-Sharing-Adapteranordnung A) im gezeigten Ausführungsbeispiel an der sekundären Kommunikationsschnittstelle 113 aufgesteckt wird, ist und wird dieser Adapter A nachfolgend teilweise auch für diesen Anwendungsfall als Sekundär-Adapter SA bezeichnet.

Nachfolgend wird anhand des Ausführungsbeispiels gemäß Figur 4 eine alternative Lösung gezeigt, bei der als Site-Sharing-Adapter A nicht, wie anhand der vorausgegangenen Ausführungsbeispiele beschrieben, ein sogenannter Sekundär-Adapter SA, sondern ein Primär-Adapter PA an der primären Kommunikationsschnittstelle 13 mit seinem Koppelanschluss KoAn angeschlossen bzw. anschließbar ist.

Da an der primären Kommunikationsschnittstelle 13 an sich eine Primary schon anschließbar ist, ist zur Erweiterung des Betriebs in diesem Falle der Primär-Adapter PA als Verzweigungs-Adapter so ausgebildet, dass dieser an der zur primären Kommunikationsschnittstelle 13 und damit an der zu seiner Koppelanschlussseite 38 mit seinem Koppelanschluss KoAn gegenüberliegenden Anschlussseite 39 zumindest zwei Primary-Anschlüsse PrAn umfasst.

Da die primäre Kommunikationsschnittstelle 13 im gezeigten Ausführungsbeispiel eine männliche Konnektor-Konfiguration MK aufweist, ist der entsprechende hier aufsetzbare Anschluss des Primär-Adapters PA mit einer weiblichen Konnektor-Konfiguration FK versehen, so dass mit anderen Worten die männliche Konnektor-Konfiguration MK an der primären Kommunikationsschnittstelle 13 an der dazu entfernt liegenden Anschlussseite 39 an den beiden dort ausgebildeten Primary-Anschlüssen PrAn des Primär-Adapters PA erhalten bleibt. Das Gleiche würde dann gelten, wenn die primäre Kommunikationsschnittstelle 13 eine weibliche Konnektor-Konfiguration FK aufweisen würde. In diesem Fall würde diese gleiche weibliche Konnektor-Konfiguration FK an den Primary-Anschlüssen PrAn vorgesehen sein.

Im gezeigten Ausführungsbeispiel sind also hier zwei primäre Kommunikationsleitungen oder jeweils zwei Kommunikationsbusse 11 anschließbar.

Die verschiedenen Ausführungsbeispiele sind für den Fall erläutert worden, dass die primäre Kommunikationsschnittstelle 13 eine männliche Konnektor-Konfiguration MK und die sekundäre Kommunikationsschnittstelle 113 eine weibliche Konnektor-Konfiguration FK aufweist. Entsprechend ist jeweils der Koppelanschluss KoAn des anzuschließenden Adapters jeweils umgekehrt zu wählen, wobei der Adapter an der Anschlussseite 39 dann die Primäranschlüsse PrAn mit einer Konnektor-Konfiguration entsprechend der primären Kommunikationsschnittstelle 13 und die Verkettungs-Anschlüsse VeAn (soweit vorgesehen) jeweils mit einer Konnektor-Konfiguration entsprechend der sekundären Kommunikationsschnittstelle 113 aufweist. Ob dabei die primäre Kommunikationsschnittstelle 13 die männliche Konnektor-Konfiguration MK und die sekundäre Kommunikationsschnittstelle 113 die weibliche Konnektor-Konfiguration FK aufweist oder umgekehrt, ist für die Umsetzung der Erfindung ohne Bedeutung.

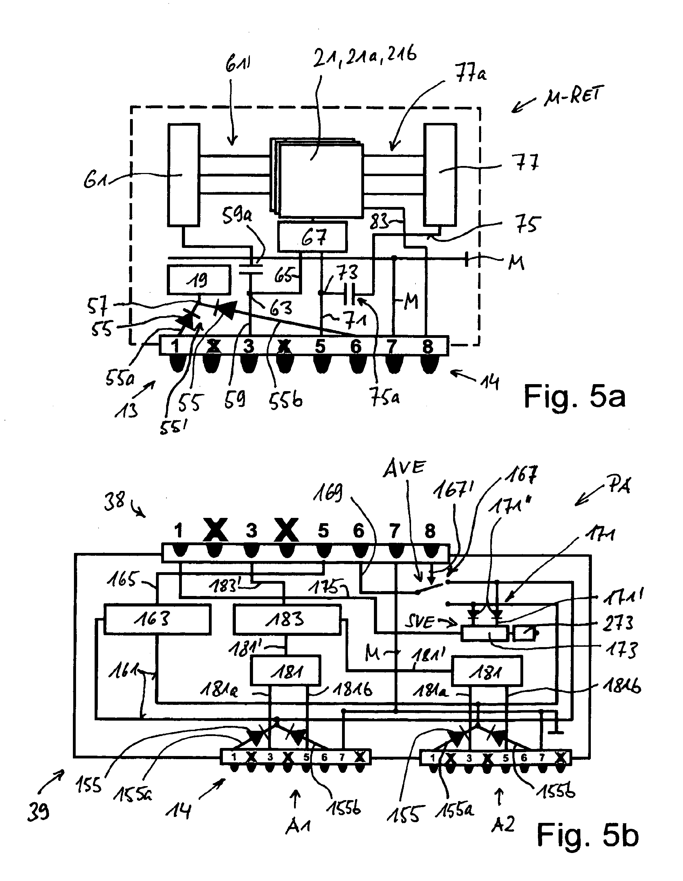

Nachfolgend wird auf Figur 5a und 5b Bezug genommen, wobei in Figur 5a eine Multi-Strahlform-Steuerungseinrichtung M-RET und in Figur 5b ein Primäradapter PA gezeigt ist, der mit seinem Koppelanschluss KoAn an dem Primäranschluss 13 (primärer Kommunikationsanschluss 13) der Multi-Strahlformeinrichtung M-RET angeschlossen werden kann.

Die Multi-RET-Einheit ist grundsätzlich wie anhand von Figur 1a und 1b beschrieben aufgebaut.

Angedeutet ist beispielsweise eine für die AISG-Spezifikation zum Einsatz kommende Steckverbindung an der primären Kommunikationsschnittstelle 13 mit acht Stiften oder Pins 14, die mit den Nummern 1 bis 8 durchnummeriert sind.

Wie zu ersehen ist, ist der Pin mit der Nummer 2 und der Pin mit der Nummer 4 unbelegt und deshalb in Figur 5 ausgeixt.

Die Pins mit der Nummer 3 und 5 dienen der Datenübertragung und damit der Kommunikation.

Die Pins mit der Nummer 1 und 6 dienen der Energieversorgung, also der Stromversorgung der Multi-RET-Einheit M-RET.

Über den Pin mit der Nummer 7 wird eine Masseverbindung M realisiert. Schließlich wird der Pin mit der Nummer 8 benötigt, um den angeschlossenen Primäradapter PA bezüglich der nachfolgend noch erörterten Energieversorgung umzuschalten.

Die vorstehend genannte Pin- oder Steckerbelegung ist dabei grundsätzlich nur beispielhaft. Mit anderen Worten kann die Reihenfolge der Steckverbindungen (Pins 14) grundsätzlich beliebig und völlig unterschiedlich sein. So könnte beispielsweise - was nachfolgend noch erörtert wird - über den Pin mit der Nummer 3 ein Detektionssignal und über den Pin mit der Nummer 5 ein Kommunikationssignal übertragen werden, also umgekehrt zu dem nachfolgend erörterten Ausführungsbeispiel. Ebenso könnte beispielsweise auch in der nachfolgend erörterten Variante des Site- Sharing-Adapters, bei welcher ein separates Detektionsmodem gar nicht vorgesehen ist, eine Ansteuerung eines hierfür vorgesehenen Leistungsschalters 167 nicht über einen, in dieser Variante des nachfolgend erörterten Ausführungsbeispiels, gezeigten Steckverbinder mit der Nummer 5, sondern über den Pin mit der Nummer 3 erfolgen etc.. Beliebige Abwandlungen sind insoweit möglich.

Aus der Darstellung gemäß Figur 5a ist auch ersichtlich, dass der erste und sechste Pin jeweils über eine Diodenleitung 55a bzw. 55b mit je einer Diode 55, also einer Leitung 55a von Pin 1 bzw. 55b von Pin 6, zu einem gemeinsamen Summen- oder Sternpunkt 57 führt, worüber eine elektrische Verbindung zu der Spannungsversorgungseinrichtung 19 besteht, worüber die Baugruppen der Multi-Strahlformeinrichtung M-RET mit Spannung und Strom versorgt werden.

Aus der Darstellung ist ferner zu ersehen, dass der Pin mit der Nummer 3 über eine Leitung 59 mit zwischengeschaltetem Kondensator 59a mit einem Kommunikationsmodem 61 verbunden ist, welches grundsätzlich als Zweifach-Modem ausgebildet sein könnte, im vorliegenden Fall jedoch als Dreifach-Modem ausgebildet ist, um letztlich bei Zuschaltung eines nachfolgend noch erörterten Primäradapters PA mit drei Anschlüssen zum Betrieb von drei Primaries verwendet werden zu können.

Der dritte Pin, also der Pin mit der Nummer 3 ist ferner über eine Kommunikations-Leitung 65 (über die Verbindungs- oder Abzweigstelle 63) mit einem Kommunikations-Transceiver 67 verbunden. Im gezeigten Ausführungsbeispiel ist in entsprechender Anlehnung an die AISG-Spezifikation die Kommunikations-Leitung 65, nämlich die sogenannte RS485- B-Leitung des RS485-Bus, ausgebildet. Die Kommunikations- Leitung 71, welche den Pin mit der Nummer 5 mit dem Kommunikations-Transceiver verbindet, stellt in diesem Ausführungsbeispiel die sogenannte RS485-A-Leitung dar. Mittels des Kommunikations-Transceivers 67 können beispielsweise differenzielle Signale bezüglich der abzuwickelnden Kommunikation entsprechend der AISG-Spezifikation in TTL- Signale umgesetzt und dem Mikroprozessor 21 zugeführt werden.

Der Pin mit der Nummer 5 ist somit über eine direkte Leitung 71 mit dem zweiten Eingang des Kommunikations-Transceivers 67 verbunden, wobei von einer Verzweigungsstelle 73 eine Verbindungsleitung 75 unter Zwischenschaltung eines Kondensators 75a mit einem Detektionsmodem 77 verbunden ist, welches im gezeigten Ausführungsbeispiel ebenfalls als Zweifach-Modem ausgebildet sein könnte, im vorliegenden Falle jedoch als Dreifach-Detektionsmodem 77 ausgebildet ist.

Zudem ist auch in Figur 5a eine vom Mikroprozessor 21 kommende Schaltleitung 83 mit dem Pin mit der Nummer 8 verbunden.

Schließlich wird auch noch darauf hingewiesen, dass an dem Anschluss-Pin mit der Nummer 7 eine Masseleitung M angeschlossen ist, die mit einer entsprechend nachfolgend noch erörterten Masseleitung M im Falle eines angeschlossenen Primär- oder Sekundäradapters PA bzw. SA galvanisch in Verbindung steht.

An eine derartige Multi-Strahlformeinrichtung M-RET ist dann ein erwähnter Primäradapter PA angeschlossen, wobei anhand der Zeichnungen davon ausgegangen wird, dass der Anschluss des Primäradapters PA an der Kommunikationsschnittstelle 13 an dem Primäranschluss der Multi-Strahlformeinrichtung M-RET erfolgt. Ansonsten könnte ein gleich aufgebauter Adapter A in Form eines Sekundäradapters SA zum Anschluss an der sekundären Kommunikationsschnittstelle 113 verwendet werden, wobei in diesem Falle dann an der Anschlussseite 38 des Adapters A, SA nicht eine weibliche Stecker-Konfiguration FK, sondern eine männliche Stecker-Konfiguration MK ausgebildet sein müsste, da die sekundäre Schnittstelle 113 an der M-RET-Einheit nicht mit einer männlichen Stecker-Konfiguration (männliche Konfiguration MK), sondern mit einer weiblichen Anschluss-Konfiguration FK ausgebildet ist.

Der Primär- oder Sekundäradapter PA, SA weist also zwei Primäranschlüsse A1 und A2 auf, und zwar mit Steckern bzw. Pins 14, die pinkompatibel zu den Steckern oder Pins 14 an der primären Kommunikationsschnittstelle 13 der Multi- Strahlformeinrichtung M-RET sind. Mit anderen Worten sind die primären Steckverbindungs-Möglichkeiten des Site-Sharing-Adapters A, hier des Primäradapters PA, anschlusskompatibel zu der primären SteckverbindungsMöglichkeit der Multi-RET oder einer Single-RET, d.h. dass die z.B. im AISG 1.1 Standard spezifizierte Pin-Belegung der dort vorgeschriebenen achtpoligen Steckverbindung auch für den Site-Sharing-Adapter A, also in Form des Primäradapters PA bzw. des Sekundäradapters SA gültig ist.

Der Site-Sharing-Adapter A ist dabei so aufgebaut, dass für jeden Anschluss A1, A2 jeweils wieder der Pin/Stecker mit der Nummer 1 und der Nummer 6 über jeweils eine Diodenleitung 155a bzw. 155b zu einem gemeinsamen Summierungs- oder Sternpunkt 157 zusammengefasst sind, wobei in jeder der beiden Diodenleitungen 155a, 155b eine zugehörige Diode 155 geschaltet ist.

Der jeweilige Summierungs- oder Sternpunkt 157 der beiden Primäranschlüsse A und B ist mit jeweils einer separaten Detektionsleitung 161 verbunden, die in Figur 5b links liegend zu einem Zweifach-Detektionsmodem 163 führt, dessen Ausgangsleitung 165 mit dem Steckanschluss mit der Nummer 5 verbunden ist.

Das gegenüberliegende Ende der jeweiligen Detektionsleitung 161 führt zu einem Wechselschalter 167, der in Abhängigkeit eines Signals vom Steckanschluss 8 umgeschaltet werden kann und je nach Schaltstellung die eine oder die andere Detektionsleitung 161 über eine Spannungsversorgungsleitung 169 mit einem Anschluss, hier einer Buchse 14' mit der Nummer 6, verbindet.

Gleichzeitig sind die in dieser Ausführungsform beiden Detektionsleitungen 161 über eine Diodenschaltung 171 mit jeweils einer Diodenleitung 171' mit je einer pro Diodenleitung 171' geschalteten Diode 171" mit einer Gleichspannung/Gleichspannungs-Umsetzungseinrichtung 173 verbunden, die über eine Permanent-Energieversorgungsleitung 175 mit dem Steckanschluss mit der Nummer 1 verbunden ist.

Durch diese technische Maßnahme wird eine Stand-by-Versorgungseinrichtung SVE realisiert, auf deren Bedeutung nachfolgend noch eingegangen wird.

Während die an dem Primärkontakt A1 bzw. A2 des Site-Sharing-Adapters A anliegenden Kommunikationssignale (die also an dem Pin/Stecker mit der Nummer 3 bzw. 5 anliegen), und die gemäß der im gezeigten Ausführungsbeispiel zugrunde gelegten AISG-Spezifikationen über einen Kommunikations-Bus 181a bzw. 181b übertragen werden, nämlich hier in Form eines RS485-Busses, können mittels des in dem Site-Sharing-Adapters A vorgesehenen Kommunikations-Bus- Transceiver 181 (hier in Form eines RS485-Transceivers) die Kommunikationssignale z.B. in TTL-Signale gewandelt werden und über die Busleitung 181' beispielsweise mittels eines nachfolgend zugeschalteten Kommunikationsmodems 183 derart übersetzt werden, dass die entsprechenden Sendeinformationen frequenzmoduliert über eine Eindrahtverbindung, nämlich über eine Kommunikationsleitung 183' zu dem Anschluss mit der Nummer 3 übertragen werden können, worüber dann über die entsprechende Steckverbindung zum Steckanschluss mit der Nummer 3 in der M-RET-Einheit die entsprechende Kommunikationsverbindung hergestellt ist.

Bei den erwähnten TTL-Signalen, welche Ausgangspegel von Transistorschaltungen sind, stellen z.B. Spannungen u ? 0,8 V den "Low-Pegel" und u ? 2,0 V den "High-Pegel" dar.

Aus dem geschilderten Aufbau geht also hervor, dass jeweils die beiden Kommunikationsanschlüsse mit der Nummer 3 und 5 für jeden Primäranschluss A1 bzw. A2 über eine Leitung 181a bzw. 181b mit dem zugehörigen Kommunikations-Transceiver 181 in Verbindung stehen, hier also mit dem RS485-Transceiver.

Mittels dieses Aufbaus werden die differenziellen Signale der beiden Leitungen 181a, 181b des jeweiligen Kommunikations-Busses (hier RS485-Busses), über welche eine Datenübertragung über die Anschluss-Pins mit der Nummer 3 und 5 stattfindet, in TTL-Signale, welche über das Leitungspaar 181' übertragen werden, gewandelt. Dies gilt für alle vorgesehenen Primäranschlüsse, hier für die Primäranschlüsse A1 und A2. Die in den bekannten Standards AISG 1.1/3GPP spezifizierten Protokolle werden im Halbduplex- Verfahren übertragen.

Wendet man diese Vorgehensweise der Übersetzung von z.B. differenziellen Signalen nach frequenzmodulierten Signalen auf jeden der primären Anschlüsse A1 bzw. A2 an und wählt für die unterschiedlichen Primäranschlüsse A1 und A2 Trägerfrequenzen, welche sich nicht gegenseitig beeinträchtigen, so können mehrere unabhängige frequenzmodulierte Signale gleichzeitig über eine Kommunikationsleitung 183' übertragen werden. Die gleichzeitige Übertragung einzelner, unterschiedlicher Trägerfrequenzen wird als Frequenzmultiplex bezeichnet.

Es können somit mehrere frequenzmodulierte Signale mehrerer voneinander unabhängiger Primaries zeitgleich über einen einzigen Pin bzw. Stecker 14 der entsprechenden Steckverbindung, wie also der AISG-Steckverbindung übertragen werden. Auf der Empfangsseite befindet sich ebenso ein Kommunikationsmodem 61, welches diese Signale unterschiedlicher Frequenzen demoduliert und diese wiederum in Form von TTL-Signalen dem zumindest einen oder den gegebenenfalls mehreren Mikroprozessoren 21, 21a, 21b der Multi-RET-Einheit über einen Bus 61' zur Verfügung stellt. Diese physikalische Umsetzung der Signale findet in beiden Richtungen statt, d.h. es kann sowohl gesendet als auch empfangen werden, wodurch letztendlich eine bidirektionale und unabhängige Kommunikation mehrerer Primaries ermöglicht wird. Je nach Ausführung, kann die Multi-RET-Einheit z.B. nur mit einem Prozessor 21, der letztendlich von allen Primaries, hier den Primaries A1 oder A2 angesprochen wird, oder auch z.B. mit je einem Prozessor je anschließbarer Primary ausgestattet sein.

Von daher ergibt sich aus dem geschilderten bidrektionalen Aufbau, dass von dem jeweiligen Primäranschluss A1, A2 kommend die dem jeweiligen Primäranschluss zugeordneten Kommunikations-Transceiver 181 die Signale entsprechend umsetzen und über ein zu dem jeweiligen Primäranschluss gehörendes Kommunikations-Busleitungspaar 181' dem Kommunikationsmodem 183 zuführen, über welches dann über die nachfolgende Ein-Draht-Leitung 183' die Übertragung der Kommunikationssignale in dem erwähnten Frequenzmultiplex-Verfahren abgewickelt wird, d.h. über die Stecker- Schnittstelle mit der Nummer 3.

Ebenso verläuft die Kommunikation in umgekehrter Richtung von der Multi-Strahlformeinrichtung über den Kommunikationsanschluss mit der Nummer 3, die Kommunikations-Busleitung 183' zu dem Kommunikationsmodem 183, wobei dort die im Frequenzmultiplex-Verfahren übertragenen Signale wieder in TTL-Signale gewandelt und über die jeweiligen angeschlossenen Leitungspaare 181' und den Kommunikations-Transceivern 181 den jeweiligen Pins mit den Nummern 3 und 5 des jeweils angeschlossenen Primaries A1 oder A2 zugeführt werden.

Gleichzeitig wird bei jedem Primäranschluss, hier A1 und A2, über die Dioden-Summenschaltung, die mit dem jeweiligen Steckanschluss mit der Nummer 1 und der Nummer 6 verbunden ist, die hier anliegende Gleichspannung für jeden Primäranschluss A1 bzw. A2 auf die erwähnte separate Detektionsleitung 161 durchgegeben, wobei die jeweils höhere Spannung über die erwähnte Dioden-ODER-Schaltung 171 an die Gleichspannung/Gleichspannungs-Konverterschaltung unterbrechungsfrei weitergegeben wird. So ist es durchaus üblich, dass an den Primary-Anschlüssen A1 oder A2, beispielsweise an dem Steckanschluss mit der Nummer 1 oder Nummer 6, eine Gleichspannung anliegen kann, die zwischen 10 V bis 30 V Gleichspannung schwankt. Die jeweils höchste Gleichspannung wird über die ODER-Schaltung 171 an den DC/DC-Konverter bzw. Umsetzer 173 weitergegeben und in eine Gleichspannung von beispielsweise 8 V transformiert, die dann über die Spannungsversorgungsleitung 175 zum Pin mit der Nummer 1 und von dort über die nachfolgende Diodenleitung 55a der Spannungsversorgungseinrichtung 19 in der M-RET-Einheit zur Versorgung der Elektronik in der M-RET-Einheit zugeführt wird.

Dadurch ist eine permanente und unterbrechungsfreie Stand-by-Versorgungseinrichtung SVE, also eine permanente und unterbrechungsfreie Leistungsversorgung für die Multi-Strahlformeinrichtung M-RET gewährleistet. Denn sollte beispielsweise eine der Primaries abschalten, wird stets - wenn zumindest eine zweite Primary angeschlossen ist - eine konstante Gleichspannung über die Diodenschaltung 171 auf die permanente Energieversorgungsleitung 175 zur Speisung der Multi-Strahlformeinrichtung M-RET ohne Unterbrechung weitergegeben.

Um bestimmte Funktionen der Multi-RET-Einheit spezifikationskonform ausführen zu können, wie z.B. einen Spannungs-Reset, benötigt die Multi-RET-Einheit Informationen darüber, ob eine angeschlossene Primary eine Spannung an den entsprechenden Steckern oder Pins 14, 14' anlegt oder nicht.

Grundsätzlich stellt sich aber die Frage, welche der angeschlossenen Primaries die Multi-RET mit Leistung versorgt oder versorgen kann. Hier muss zwischen der erwähnten Stand-by-Leistung (stand-by, idle mode) und einer Hauptlast unterschieden werden. Jede Primary, welche eine RET versorgen kann, ist in der Lage, ständig die entsprechende im AISG1.1/3GPP Standard spezifizierte Stand-by-Leistung abzudecken. Damit bietet sich zur Stand-by-Leistungsabdeckung der Multi-RET also die erläuterte Stand-by-Versorgungseinrichtung SVE mit der Dioden- ODER-Schaltung 171 an, welche alle zuvor erwähnten Sternpunkte auf einen weiteren Sternpunkt zusammenführt und über einen Abwärtswandler 173 auf eine Spannung wandelt, welche niedriger ist als alle anliegenden Eingangsspannungen, z.B. kleiner als die niedrigste in AISG1.1/3GPP spezifizierte Eingangsspannung an A1, A2 und A3. Diese Spannung wird dann einem der zur Leistungsversorgung vorgesehenen Pins der Multi-RET zugeführt, nämlich hier dem Steckanschluss mit der Nummer 1. Einzige Anforderung an diese Spannung ist, dass die in der Multi-RET vorgesehene Elektronik im Stand-by-Leistungsbereich betrieben werden kann.

Über die erläuterte Schaltung ist also sichergestellt, dass, unabhängig von der Anzahl der angeschlossenen spannungsversorgenden Primaries, die Multi-RET ständig mit Spannung versorgt ist. Hier ist vorauszusetzen, dass zumindest eine Primary Spannung an dem Site-Sharing-Adapter anlegt.

Der Aktiv-Leistungsbereich unterscheidet sich vom Stand-by-Leistungsbereich dadurch, dass zu der Stand-by-Leistungsversorgung der in der Multi-RET verbauten Elektronik zusätzlich ein oder mehrere Aktuatoren betrieben werden können. Die Leistungsaufnahme dieser Aktuatoren kann sich deutlich von der Stand-by-Leistung abheben, wodurch eine quasi willkürliche Leistungsaufnahme von einer x-beliebigen, angeschlossenen Primary nicht mehr toleriert werden kann. Schließlich sollen die anfallenden Betriebskosten eines von mehreren Netzbetreibern betriebenen Standortes völlig transparent auf diese, je nach Verbrauch, aufgeteilt werden können.
Um diesem Anspruch gerecht zu werden, sind zusätzliche Maßnahmen vorgesehen.

Dazu ist zum einen eine Detektionseinrichtung vorgesehen, die erkennt welche Primaries angeschlossen sind.

Für das Erkennen, welche Primary für die Aktiv-Leistungsversorgung zuständig ist, wird zunächst auf das Folgende nochmals verwiesen.

Nach dem erläuterten AISG1.1/3GPP Standard können RET-Einheiten allgemein über die Pins mit der Nummer 1 und der Nummer 6 versorgt werden. Im Site-Sharing-Adapter A werden je Primary-Anschluss diese Pins über die erwähnten Dioden 155 in den jeweiligen Diodenleitungen 155a, 155b auf dem erwähnten Sternpunkt 157 zusammengeführt, wodurch ebenfalls eine Dioden-ODER-Schaltung verwendet wird. An diesen Sternpunkten 157 kann nunmehr detektiert werden, ob eine Primary Spannung an den Anschlüssen anlegt oder nicht.

Diese Information wird über die erwähnte Detektionsleitung 161 (wobei für jede angeschlossene Primary eine separate Detektionsleitung 161 vorgesehen ist) einem weiteren Modem, hier dem bereits erwähnten Detektionsmodem 163, zugeführt, welches im gezeigten Ausführungsbeispiel lediglich als Zweifach-Modem ausgebildet ist, weil nur zwei Primaries A1 bzw. A2 anschließbar sind und deren Informationen ausgewertet werden müssen. Die Informationen werden also über dieses Detektionsmodem 163 mittels unterschiedlicher Frequenzen über eine gemeinsame Buchse 14' bzw. einen gemeinsamen Stecker/Pin 14, hier den Steckanschluss mit der Nummer 5, in Form von frequenzmodulierten Signalen in einem Frequenz-Multiplex-Verfahren zur Multi-RET-Einheit übertragen und dieser mitgeteilt.

In der Multi-RET-Einheit wird dann über die erwähnte Detektionsleitung 75 das entsprechende frequenzmodulierte Signal zur Demodulierung dem Detektionsmodem 77 übermittelt, welches dann über eine Leitung oder einen Bus 77a dem Mikroprozessor 21 mitteilt, welche der Primaries eine Gleichspannung einspeist.

Der Mikroprozessor (21; 21a, 21b) erkennt, welche der Primaries Kommandos sendet, die wiederum Aktionen im Aktiv-Leistungsbereich anstoßen bzw. nur im Aktiv-Leistungsbereich ausführbar sind.

Im Rahmen der Erfindung ist also vorgesehen, dass die Multi-RET erkennt, welches primäre Steuergerät bestimmte Funktionalitäten im Aktiv-Leistungsbereich angestoßen hat, um dann diese Informationen beispielsweise über einen freien, noch nicht in den Standards belegten Pin oder zu diesem Zeitpunkt unbenutzten Pin (bzw. Buchse), d.h. im vorliegenden Fall über den Stecker oder Pin bzw. Buchse mit der Nummer 8, an den Site-Sharing-Adapter A zu kommunizieren, welcher den bereits erwähnten Leistungswechselschalter 167 so schaltet, dass die in diesem Ausführungsbeispiel beiden Detektionsleitungen 161 mit dem für die Energieversorgung zusätzlich vorgesehenen Steckanschluss mit der Nummer 6 verbunden werden, über welchen die Aktiv-Leistung von der betreffenden Primary A1 oder A2 entnommen werden soll. Mit anderen Worten wird über den Leistungswechselschalter 167 sichergestellt, dass die Aktiv-Leistung nun von den Primaries A1 oder A2 gezogen wird, welche der Multi-RET das entsprechende im Aktiv- Leistungsbereich auszuführende Kommando gesendet haben.

Die über den Leistungswechselschalter 167 ausgewählte Versorgungsspannung wird z.B. über den zweiten, im AISG1.1/3GGP Standard für die Spannungsversorgung vorgesehenen Pin, hier mit der Pin-Nummer 6, der Multi-RET zur Verfügung gestellt.

Die beiden zur Spannungsversorgung belegten Pins mit der Nummer 1 und 6 sind dann auf Seiten der Multi-RET über die bereits erwähnte Dioden-ODER-Schaltung 55' mit den beiden Diodenleitungen 55a und 55b und den daran geschalteten Dioden 55 auf den erwähnten Sternpunkt 57 verschaltet. Von diesem Sternpunkt 57 aus wird dann das erwähnte Netzteil 19 der Multi-RET gespeist. Da die über den Leistungswechselschalter 167 selektierte Versorgungsspannung über der Spannung liegt, welche über den Abwärtswandler der Multi-RET zugeführt wird, ist garantiert, dass die Aktiv- Leistung von dem primären Steuergerät gezogen wird, welches das entsprechende Kommando zuvor gesendet hat.

Mit anderen Worten werden also die Standby-Leistungsversorgung SVE und die Aktiv-Leistungs-Versorgungseinrichtung AVE über die beiden Diodenleitungen 55a und 55b in der Multi-RET-Einheit M-RET über die dadurch realisierte ODER- Schaltung 55' auf den erwähnten Sternpunkt 57 zusammengeschaltet, wodurch eine unterbrechungsfreie Umschaltung von der Standby-Spannungsversorgung zu einer aktiven Leistungs-Spannungsversorgung und umgekehrt in der Multi-RET- Einheit vorgenommen werden kann.

Es ist bereits erwähnt worden, wie über das Detektionsmodem 163 ausgewertet wird, welche Primary angeschlossen ist bzw. welches primäre Steuergerät Gleichspannung einspeist oder nicht.

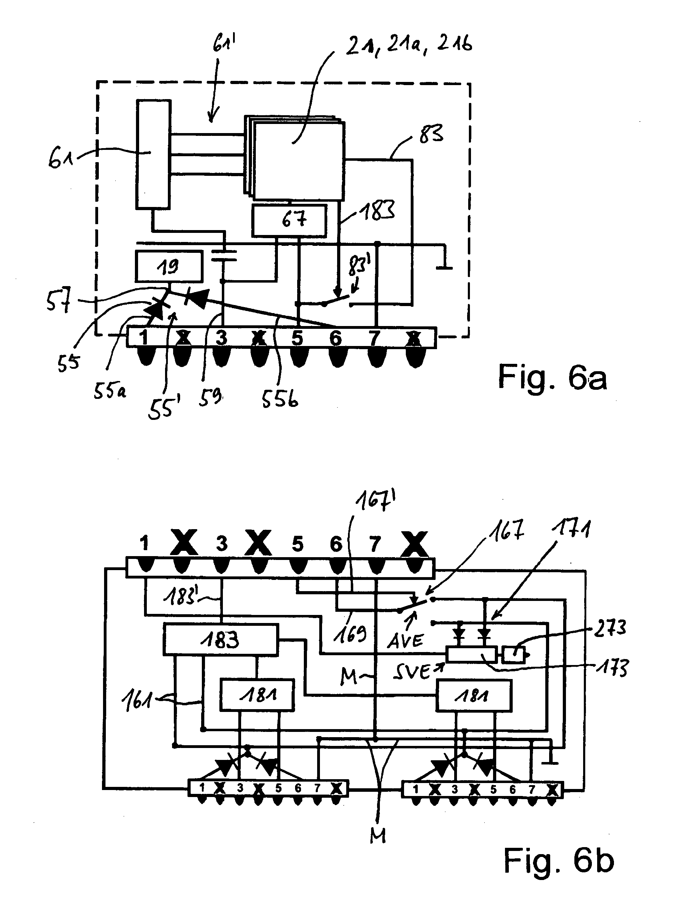

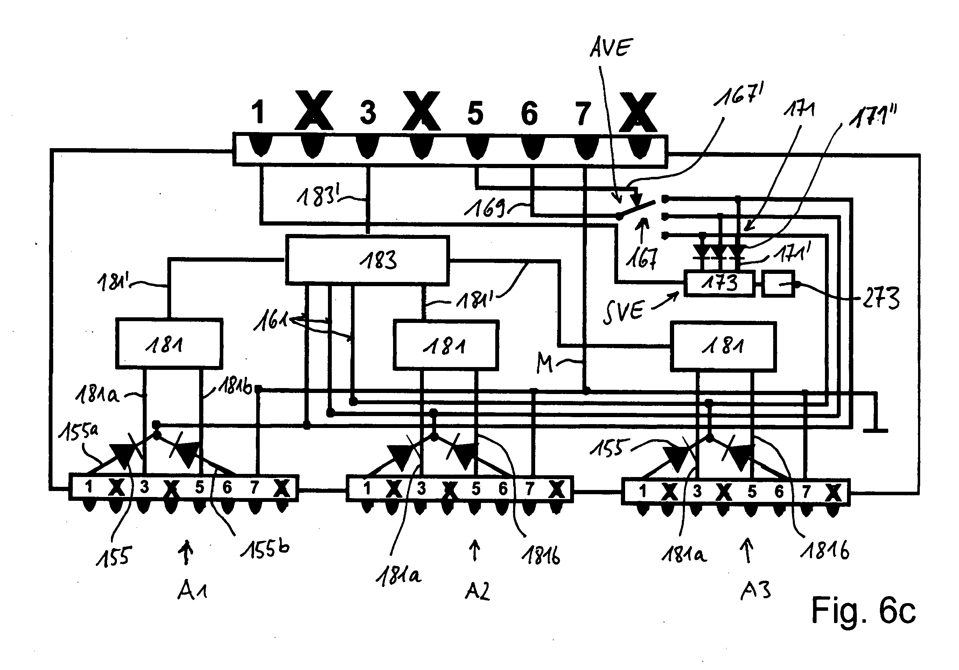

Alternativ dazu könnte eine entsprechende Information dazu aber auch über das bereits vorgesehene Kommunikationsmodem 183 ausgewertet und entsprechend zur Multi-Strahlform-Steuerungseinrichtung M-RET weiter gegeben werden. Dies kann dadurch bewerkstelligt werden, indem das Kommunikationsmodem 183, falls an einem Primary-Anschluss A1 oder A2 keine Spannung anliegt, auf der entsprechenden Frequenz ein kontinuierliches Signal oder ein anderes charakteristisches Signal sendet, worüber der Multi-RET-Einheit mitgeteilt wird, welcher Primary-Anschluss mit Spannung versorgt ist und welcher nicht. Liegt eine Spannung an, wird kein Signal bzw. kein anderes charakteristisches Signal gesendet, wodurch die Frequenz zur Daten-Kommunikation zwischen Primary und Multi-RET-Einheit genutzt werden kann. Somit könnte bei jedem Site-Sharing-Adapter und bei jeder Multi-RET-Einheit auf das erläuterte Detektionsmodem 163 bzw. 77 verzichtet werden, wie dies grundsätzlich für einen entsprechenden Site-Sharing-Adapter A anhand von Figur 6b und Figur 6c gezeigt ist.

Bei der Darstellung gemäß Figur 6a wird insoweit auch eine leicht abgewandelte Multi-Strahlform-Steuerungseinrichtung M-RET verwendet, die zudem auch kein Detektionsmodem 77 mehr umfasst. Da die entsprechende Auswertung, welche Primary anliegt und Spannung einspeist, in diesem Falle über die Kommunikationsstrecke 183' im Site-Sharing-Adapter A und über die Leitungen 59 in der Multi-RET-Einheit und dem Kommunikationsmodem 61 erfolgt, ist es auch möglich, den Leistungswechselschalter 167 und damit die von diesem Schalter ausgehende Schaltleitung 167', die bei dem vorausgehenden Ausführungsbeispiel über die Pins mit der Nummer 8 von der Multi-RET-Einheit dem Site-Sharing-Adapter A zugeführt wurde, nunmehr über den Pin mit der Nummer 5 ausgehend vom Mikroprozessor 21 zu übermitteln. Die entsprechende vom Mikroprozessor 21 kommende Schaltleitung 83 führt also nicht wie bei dem Ausführungsbeispiel gemäß Figur 5 über Pin 8, sondern über eine RET-seitige Schalteinrichtung 83' zu dem nunmehr in diesem Betriebsfall unbelegten Pin mit der Nummer 5, da das Detektionsmodem 163 mit der zugehörigen Ausgangsleitung 165 an dem Pin 5 nicht mehr angeschlossen ist. Die Schalteinrichtung 83' wird dabei über eine erste Schaltleitung 83" vom Mikroprozessor 21 ausgehend betätigt, um bei geschlossener Schalteinrichtung 83' die weitere oder zweite Schaltleitung 83 zur Umschalteinrichtung 167 für die Aktiv-Leistungs-Versorgungseinrichtung AVE wirksam werden zu lassen.

Eine entsprechende Darstellung für einen Site-Sharing-Adapter A ist anhand von Figur 6c für den gleichen Fall gezeigt, wenn unter Verzicht auf ein Detektionsmodem 163 nicht zwei sondern drei Primary-Anschlüsse A1, A2 und A3 vorgesehen sind.

Ferner ist auch in dem Site-Sharing-Adapter A, unabhängig ob es sich um einen Primär-Adapter PA oder um einen Sekundär-Adapter SA handelt, eine Masse-Verbindungsleitung M vorgesehen, worüber der jeweilige Anschlusspin oder Anschlussstecker mit der Nummer 7 auf der Anschlussseite eines Primaries mit dem betreffenden Pin oder Stecker mit der Nummer 7 auf der Anschlussseite 38 des Adapters A in Verbindung steht. Wie aus der Zeichnung zu ersehen ist, ist über die verzweigte MasseLeitung M somit auch eine Verbindung zwischen allen Steckern oder Anschlüssen mit der Nummer 7 für alle vorgesehenen Primary-Anschlüsse A1, A2, A3 realisiert.

Schließlich ist in Figur 5b sowie beispielsweise auch in Figur 6b noch ein weiterer Gleichstrom/Gleichstrom-Wandler 273 eingezeichnet, also ein weiterer DC/DC-Wandler 273, der zur Erzeugung einer für den Betrieb des Site-Sharing-Adapters A geeigneten Betriebsspannung dient. Dies ist notwendig, da die im Site-Sharing-Adapter A verbaute Elektronik ebenso eine Spannungsversorgung benötigt, beispielsweise von 5V DC/Gleichspannung.

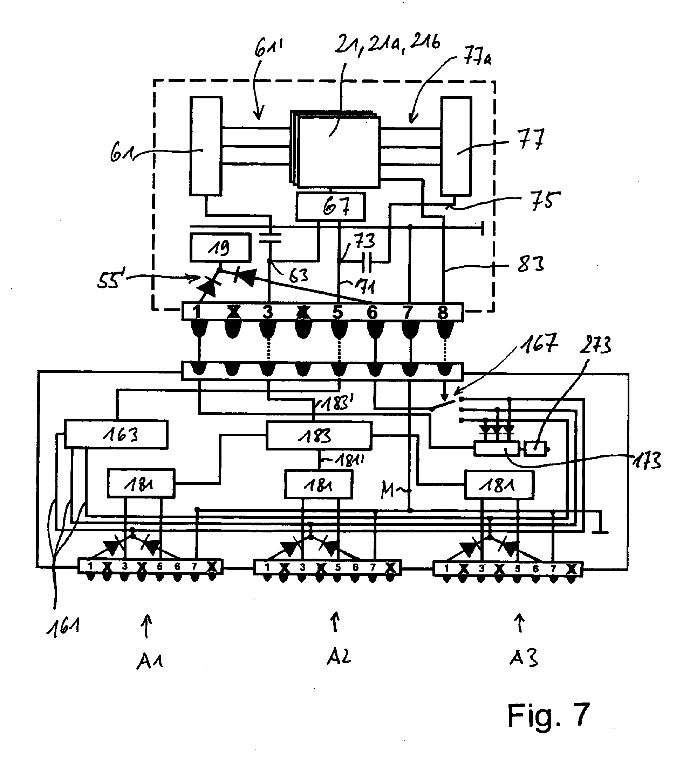

Nachfolgend wird auf Figur 7 Bezug genommen, in der eine entsprechende Schaltungsanordnung für den Fall eines Site-Sharing-Adapters A gezeigt ist, an welchem drei Primaries A1, A2 bzw. A3 angeschlossen werden können.

Daraus ist auch ersichtlich, warum die entsprechenden Modems nicht nur in der M-RET-Einheit als Dreifach-Modem ausgebildet sind, sondern in diesem Ausführungsbeispiel auch als Dreifach-Detektionsmodem 163 und als Dreifach-Kommunikationsmodem 183. Mit anderen Worten muss immer entsprechend der vorgesehenen Anschlüsse zum Anschluss von Primaries das jeweilige Modem so ausgelegt werden, dass es entsprechend der Anzahl der anschließbaren Primaries eine Auswertung vornehmen kann.

Bei den Ausführungsvarianten gemäß den beschriebenen Figuren sind also Site-Sharing-Adapter A gezeigt, wie sie grundsätzlich als Primär-Adapter PA wie auch als Sekundär-Adapter SA verwendet werden können, wobei im Falle des Ausführungsbeispieles nach Figur 7 (welches zum Anschluss von drei Primaries vorgesehen ist) dann beispielsweise drei Detektionsleitungen 161 vorgesehen sind, die zu dem Detektionsmodem 163 führen, falls eine Umsetzung - wie anhand der Figuren 5a und 5b gezeigt - erfolgen soll. Bei der Ausführungsvariante gemäß den Figuren 6a, 6b und 6c würde ein solches Detektionsmodem ebenfalls wegfallen, wie anhand der Figur 6a und 6b erläutert wurde. Ebenso sind für die drei Primary-Anschlüsse A1, A2 bzw. A3 drei Kommunikations-Transceiver 181 vorgesehen, die über ihre Leitungspaare 181' allesamt mit dem Kommunikationsmodem 183 verbunden sind.

Auch die erwähnte Diodenschaltung 171 umfasst dann drei Diodenleitungen 171', um alle Detektionsleitungen 161 mit dem Gleichstrom/Gleichstrom-Konverter 173 zu verbinden, bzw. durchzuschalten.

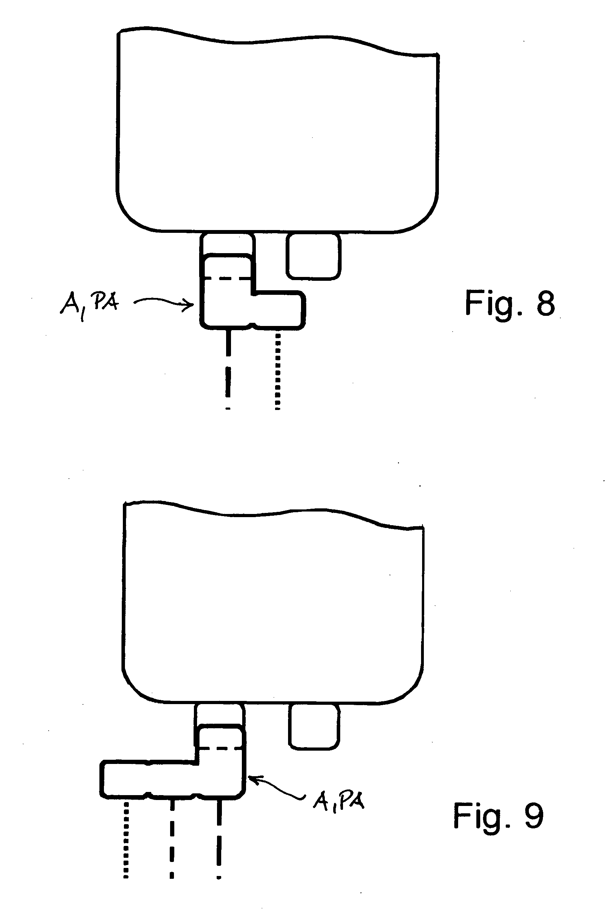

Anhand von Figur 8 ist beispielsweise gezeigt, wie vom Prinzip her ein Primary-Adapter PA ausgestaltet sein kann. Er kann nämlich mit seinem zusätzlichen Primary-Anschluss A2 von seiner Ausrichtung so geformt und angeschlossen sein, dass dadurch der zweite sekundäre Kommunikationsanschluss 113 quasi gesperrt wird, weil das Gehäuse des Primary-Adapters PA zumindest einen Teilbereich des sekundären Kommunikationsanschlusses überdeckt und unzugänglich macht.

Anhand von Figur 9 ist gezeigt, dass die Ausbildung auch umgekehrt sein kann, damit ein Sekundär-Anschluss zur weiteren Verwendung frei bleibt. Dies gilt natürlich für einen Site-Sharing-Adapter A gleichermaßen, der einen Anschluss nur für zwei oder beispielsweise für drei oder noch mehr Primaries zur Verfügung stellt. Eine entsprechende Erweiterung ist, wie sich aus der Erweiterung von zwei zu drei Primaries ergibt, problemlos möglich.

In Abweichung zu Figur 8 und 9 können die dort gezeigten Site-Sharing-Adapter beispielsweise auch so ausgebildet sein, dass sie in gegenüber Figur 8 und 9 verdrehter Anordnung, beispielsweise in um 180° verdrehter Anordnung montiert werden können, also in einer Montagelage montiert werden, in der der jeweils andere Anschluss, hier der Sekundär-Anschluss zum Anschluss einer Verkettungsverbindung beispielsweise zu einer nächsten Antenne frei bleibt. Die anhand von Figur 8 und 9 gezeigten Beispiele gelten dabei gleichermaßen auch für einen an dem Sekundär-Anschluss 113 anschließbaren Sekundär-Adapter, aber ohne dass dies zeichnerisch dargestellt ist.

## Patentansprüche

1. Multi-Strahlform-Zusatzeinrichtung zum Anschluss an einen primären oder sekundären Kommunikationsanschluss (13, 113) einer Multi-Strahlform-Steuerungseinrichtung (M-RET), insbesondere für eine Mobilfunkantennenanlage, mit folgenden Merkmalen:
- die Multi-Strahlform-Zusatzeinrichtung umfasst einen Site-Sharing-Adapter (A) in Form eines Primär-Adapters (PA), der an seinem zugehörigen Koppelanschluss (KoAn) mit einer weiblichen (FK) oder männlichen (MK) Konnektor-Konfiguration versehen ist, oder in Form eines Sekundär-Adapters (SA), der an seinem zugehörigen Koppelanschluss (KoAn) mit einer männlichen (MK) oder weiblichen (FK) Konnektor-Konfiguration versehen ist,
- der Site-Sharing-Adapter (A) weist zumindest zwei Primary-Anschlüsse (A1, A2, A3) zum Anschluss zumindest zweier primärer Steuergeräte auf,
- die Stecker- und/oder Anschluss-Konfiguration bzw. Anschluss-Belegung an den Primary-Anschlüssen (A1, A2, A3) ist kompatibel zur Anschluss-Konfiguration bzw. Anschluss-Belegung des Koppelanschlusses(KoAn) des Site-Sharing- Adapters (A),
- die für die bidirektionale Signalübertragung im Site-Sharing-Adapter (A) vorgesehenen Anschluss-Pins oder Anschluss-Buchsen, beispielsweise die Anschluss-Pins/die Anschluss-Buchsen 3, 5, an den zumindest beiden Primary-Anschlüssen (A1, A2, A3) sind mit einem für die bidirektionale Signalübertragung vorgesehenen Anschluss-Pin oder einer Anschluss-Buchse, beispielsweise Anschluss-Pin/Anschluss-Buchse 3, des Koppelanschlusses (KoAn) unter Ausbildung eines bidirektionalen Signalübertragungsweges verbunden,
- der bidirektionale Übertragungsweg ist so gestaltet, dass die an den zumindest beiden Primary-Anschlüssen (A1, A2, A3) anstehenden differentiellen Kommunikationssignale in frequenzmodulierte Signale gewandelt werden, die am Koppelanschluss (KoAn) anstehen, wobei umgekehrt die am Koppelanschluss (KoAn) anstehenden frequenzmodulierten Signale in differentielle Kommunikations-Signale gewandelt werden, die an den betreffenden Anschluss-Pins oder den betreffenden Anschluss-Buchsen 3, 5 eines zugehörigen Primary-Anschlusses (A1, A2, A3) anstehen.

2. Multi-Strahlform-Zusatzeinrichtung nach Anspruch 1, **dadurch gekennzeichnet, dass** die für die Signal-Kommunikation vorgesehenen beiden Anschluss-Pins oder -Buchsen, beispielsweise die Anschluss-Pins/die Anschluss-Buchsen 3, 5, eines jeden Primary-Anschlusses (A1, A2, A3) mit einem Kommunikations-Transceiver (181) in Verbindung stehen, der so ausgestaltet ist, dass darüber die an dem jeweiligen Primary-Anschluss (A1, A2, A3) anstehenden differenziellen Kommunikationssignale in TTL-Signale gewandelt und umgekehrt am Kommunikations-Transceiver (181) anstehende TTL-Signale in differentielle Kommunikationssignale gewandelt werden, die am jeweiligen Primary-Anschluss (A1, A2, A3) anstehen.

3. Multi-Strahlform-Zusatzeinrichtung nach Anspruch 1 oder 2, **dadurch gekennzeichnet, dass** ferner ein Kommunikationsmodem (183) vorgesehen ist, welches über eine Kommunikationsleitung in Form einer Eindrahtverbindung (183') mit einem entsprechenden Anschluss-Pin oder einer entsprechenden Anschluss-Buchse 3 am Koppelanschluss (KoAn) zum einen und über jeweils eine separate Leitung oder einen separaten Bus (181') mit den Kommunikations-Transceivern (181) zum anderen verbunden ist, die mit einem jeweils ihnen zugeordneten Primary-Anschluss (A1, A2, A3) verbunden sind.

4. Multi-Strahlform-Zusatzeinrichtung nach einem der Ansprüche 1 bis 3, **dadurch gekennzeichnet, dass** in dem Site-Sharing-Adapter (A) eine Stand-by-Versorgungseinrichtung (SVE) vorgesehen ist, die so aufgebaut ist, dass darüber eine unterbrechungsfreie Gleichstromversorgung von einem oder mehreren der Primary-Anschlüsse (A1, A2, A3) an einen koppelanschlussseitigen Anschluss-Pin oder eine Anschluss-Buchse, beispielsweise Anschluss-Pin/Anschluss-Buchse 1, des Koppelanschlusses (KoAn) durchgeschaltet wird.

5. Multi-Strahlform-Zusatzeinrichtung nach Anspruch 4, **dadurch gekennzeichnet, dass** die Stand-by-Versorgungseinrichtung (SVE) für jeden Primary-Anschluss (A1, A2, A3) eine elektrische Verbindung zu jeweils einer Detektionsleitung (161) aufweist, die mit einer Einspeiseschaltung (171) vorzugsweise in Form einer ODER-Schaltung in Verbindung steht, worüber eine unterbrechungsfreie Gleichspannungsversorgung über eine nachgeschaltete Gleichspannung/Gleichspannungs-Umsetzung (173) zu zumindest einem Anschluss-Pin oder einer Anschluss-Buchse, beispielsweise Anschluss-Pin/Anschluss-Buchse 1, am Koppelanschluss (KoAn) besteht.

6. Multi-Strahlform-Zusatzeinrichtung nach Anspruch 5, **dadurch gekennzeichnet, dass** die Spannungsversorgungsschaltung (171) eine Diodenschaltung umfasst oder daraus besteht, worüber die für jeden Primary-Anschluss (A1, A2, A3) vorgesehenen Detektionsleitungen (161) über eine separate Diodenleitung (171') mit der Gleichspannung/ Gleichspannungs-Umsetzung (173) verbunden sind.

7. Multi-Strahlform-Zusatzeinrichtung nach einem der Ansprüche 1 bis 6, **dadurch gekennzeichnet, dass** von einem jeweiligen Primary-Anschluss (A1, A2, A3) über zumindest einen oder über zumindest zwei dort vorgesehene Anschluss-Pins oder Anschluss-Buchsen, z.B. Anschluss-Pin/ Anschluss-Buchse 1 und/oder 6, über je eine nachgeschaltete Diodenleitung (155a, 155b) eine Verbindung zu einer dem jeweiligen Primary-Anschluss (A1, A2, A3) zugeordneten Detektionsleitung (161) besteht.

8. Multi-Strahlform-Zusatzeinrichtung nach einem der Ansprüche 1 bis 7, **dadurch gekennzeichnet, dass** eine Aktiv- Leistungs-Versorgungseinrichtung (AVE) zur Absicherung der Aktiv-Leistungsversorgung für Aktionen im Aktiv-Leistungsbereich in Abhängigkeit einer über den Koppelanschluss (KoAn) gesendeten Information vorgesehen ist.

9. Multi-Strahlform-Zusatzeinrichtung nach Anspruch 8, **dadurch gekennzeichnet, dass** die Aktiv-Leistungs-Versorgungseinrichtung (AVE) einen Leistungswechselschalter (167) umfasst, der eine Verbindung von jeweils einer der mehreren Detektionsleitungen (161) zu einer Energieversorgungsleitung (169) herstellt, die mit zumindest einem Spannungsversorgungsanschluss-Pin oder einer Spannungsversorgungsanschluss-Buchse, beispielsweise dem Spannungsversorgungsanschluss-Pin oder der Spannungsversorgungsanschluss-Buchse 6, oder mit zumindest einem von zwei Spannungsversorgungsanschlüssen, beispielsweise mit zumindest einem der beiden Spannungsversorgungsanschlüsse 1, 6, am Koppelanschluss (KoAn) verbunden ist.

10. Multi-Strahlform-Zusatzeinrichtung nach Anspruch 8 oder 9, **dadurch gekennzeichnet, dass** die Aktiv-Leistungs-Versorgungseinrichtung (AVE) an das Kommunikationsmodem (183) angeschlossen ist, und zwar an den hierfür vorgesehenen Eingängen des Kommunikationsmodem (183), an denen die Detektionsleitungen (161), die mit den jeweiligen Primary-Anschlüssen (A1, A2, A3) in Verbindung stehen, angeschlossen sind, so dass in Abhängigkeit davon, ob und an welchem Primary-Anschluss (A1, A2, A3) eine Primary angeschlossen ist, eine Signalisierung über eine vom Kommunikationsmodem (183) ausgehende Ein-draht-Verbindung (183') an einen koppelanschlussseitigen Anschluss-Pin oder an eine koppelanschlussseitige Anschluss-Buchse, beispielsweise an dem Anschluss-Pin oder der Anschluss-Buchse 3, abgegeben wird.

11. Einrichtung, die eine Multi-Strahlform-Steuerungseinrichtung (M-RET) und eine daran angeschlossene Multi-Strahlform-Zusatzeinrichtung nach einem der Ansprüche 1 bis 10 umfasst, wobei die Multi-Strahlform-Steuerungseinrichtung ein Kommunikationsmodem (61) umfasst, um zum einen die an den mehreren Primary-Anschlüssen (A1, A2, A3) anstehenden Signale zu empfangen sowie umgekehrt von der Multi-Strahlform-Steuerungseinrichtung (M-RET) ausgesendete Signale an die Primary-Anschlüsse (A1, A2, A3) zu senden, wozu das Kommunikationsmodem (61) so ausgestaltet ist, dass die von der Multi-Strahlform-Zusatzeinrichtung gewandelten, am Koppelanschluss (KoAn) anstehenden frequenzmodulierten Signale demoduliert und in Form von TTL-Signalen über einen Bus (61') mindestens einem Mikroprozessor (21, 21a, 21b) der Multi-Strahlform-Steuerungseinrichtung (M-RET) zugeführt werden, wobei das Kommunikationsmodem (61) ferner so ausgestaltet ist, dass frequenzmodulierte Signale erzeugt werden, die am Koppelanschluss (KoAn) für die Wandlung durch die Multi-Strahlform-Zusatzeinrichtung in differenzielle Kommunikationssignale anstehen.

12. Einrichtung nach Anspruch 11, **dadurch gekennzeichnet, dass** die Multi-Strahlform-Steuerungseinrichtung (M-RET) ein Detektionsmodem (77) umfasst, welches so ausgebildet ist, dass es ein vom Primär- oder Sekundär-Anschluss (13, 113) über zumindest einen dort vorgesehenen Anschluss-Pin oder eine Anschluss-Buchse 5 erhaltenes Detektionssignal, über welchen Primary-Anschluss (A1, A2, A3) eine Aktiv-Leistungsversorgung prinzipiell erfolgen kann, an einen Mikroprozessor (21) oder an zumindest einen von mehreren Mikroprozessoren (21; 21a, 21b) übermittelt, von welchem über eine Steuerleitung (83) ein Signal zum Site-Sharing-Adapter (A) zur Betätigung des Leistungswechsel-schalters (167) der Aktiv-Leistungsversorgungseinrichtung (AVE) abgegeben wird.

13. Einrichtung nach Anspruch 11 oder 12, **dadurch gekennzeichnet, dass** zumindest zwei Anschluss-Pins oder -Buchsen, beispielsweise die zwei Anschluss-Pins oder -Buchsen 1, 6, an dem Primär- oder Sekundär-Anschluss (13, 113) vorgesehen sind, wobei über den einen Anschluss-Pin oder die eine Anschluss-Buchse, beispielsweise den Anschluss-Pin oder die Anschluss-Buchse 1, die Stand-by-Gleichstromversorgung und über den anderen Anschluss die Aktiv-Leistungsversorgung durchgeführt wird.

14. Einrichtung nach Anspruch 13, **dadurch gekennzeichnet, dass** die beiden Anschluss-Pins oder -Buchsen, beispielsweise die Anschluss-Pins oder die Anschluss-Buchsen 1, 6, über die zum einen die Stand-by-Leistung und zum anderen die Aktiv-Leistungsversorgung in den Primär- oder Sekundär-Anschluss (13, 113) eingespeist wird, über jeweils eine Diodenleitung (55a, 55b) und/oder über einen nachgeordneten Sternpunkt (57) mit einer Energieversorgungseinrichtung (19) in der Multi-Strahlform-Steuerungseinrichtung (19) verbunden ist.

15. Einrichtung nach einem der Ansprüche 11 bis 14, **dadurch gekennzeichnet, dass** das Kommunikationsmodem (61) so ausgestaltet ist, dass dem Mikroprozessor (21; 21a, 21b) Signale zugeführt werden, die an den Primary-Anschlüssen (A1, A2, A3) bzw. an dem Kommunikations-Anschluss (3) des Primär- oder Sekundär-Anschlusses (13, 113) anstehen.

16. Einrichtung nach einem der Ansprüche 11 bis 15, **dadurch gekennzeichnet, dass** die Multi-Strahlform-Steuerungseinrichtung so aufgebaut ist, dass ein Steuersignal für die Aktiv-Leistungsversorgungseinrichtung (AVE) und den zugehörigen Leistungswechselschalter (167) in Abhängigkeit eines von einem Kommunikationsmodem übertragenen und vom Mikroprozessor (21; 21a, 21b) detektierten Kommandos zur Umschaltung des Leistungswechselschalters (167) erzeugt wird.

## Claims

1. Multi-beam shape auxiliary device for connection to a primary or secondary communication terminal (13, 113) of a multi-beam shape control device (M-RET), in particular for a mobile communications antenna system, comprising the following features:
- the multi-beam shape auxiliary device comprises a site-sharing adapter (A) in the form of a primary adapter (PA), which is provided with a female (FK) or male (MK) connector configuration on the associated coupling terminal (KoAn) thereof, or in the form of a secondary adapter (SA), which is provided with a male (MK) or female (FK) connector configuration on the associated coupling terminal (KoAn) thereof,
- the site-sharing adapter (A) comprises at least two primary terminals (A1, A2, A3) for connecting at least two primary control apparatuses,
- the plug and/or terminal configuration or terminal assignment at the primary terminals (A1, A2, A3) is compatible with the terminal configuration or terminal assignment of the coupling terminal (KoAn) of the site-sharing adapter (A),
- the connection pins or connection sockets, for example the connection pins/connection sockets 3, 5, on the at least two primary connections (A1, A2, A3), which pins or sockets are provided for the bidirectional signal transmission in the site-sharing adapter (A), are connected to a connection pin or a connection socket, for example a connection pin/connection socket 3, provided for bidirectional signal transmission, of the coupling terminal (KoAn) so as to form a bidirectional signal transmission path,
- the bidirectional transmission path is configured such that the differential communication signals at the at least two primary terminals (A1, A2, A3) are converted into frequency-modulated signals, which are present at the coupling terminal (KoAn), the frequency-modulated signals present at the coupling terminal (KoAn) conversely being converted into differential communication signals which are present at the relevant connection pins or the relevant connection sockets 3, 5 of an associated primary terminal (A1, A2, A3).

2. Multi-beam shape auxiliary device according to claim 1, **characterised in that** the two connection pins or sockets, for example the connection pins/connection sockets 3,5 of each primary terminal (A1, A2, A3), which are provided for signal communication, are connected to a communications transceiver (181), which is configured such that the differential communication signals which are present at the respective primary terminal (A1, A2, A3) are furthermore converted into TTL signals, and conversely TTL signals which are present at the communications transceiver (181) are converted into differential communication signals which are present at the respective primary terminal (A1, A2, A3).

3. Multi-beam shape auxiliary device according to either claim 1 or claim 2, **characterised in that** a communications modem (183) is further provided, which is connected via a communications line in the form of a single-wire connection (183') to a corresponding connection pin or a corresponding connection socket 3 on the coupling terminal (KoAn), on one hand, and via a separate line or a separate bus (181') in each case to the communications transceivers (181), on the other hand, which are connected to a primary terminal (A1, A2, A3) assigned thereto in each case.

4. Multi-beam shape auxiliary device according to any of claims 1 to 3, **characterised in that** a standby supply means (SVE) is provided in the site-sharing adapter (A), which means is constructed such that an uninterruptible direct current supply is connected through thereby from one or more of the primary terminals (A1, A2, A3) to a coupling-terminal-side connection pin or a connection socket, for example a connection pin/connection socket 1, of the coupling terminal (KoAn).

5. Multi-beam shape auxiliary device according to claim 4, **characterised in that** for each primary terminal (A1, A2, A3), the standby supply means (SVE) comprises an electric connection to a respective detection line (161), which is connected to a supply circuit (171) which is preferably in the form of an OR circuit, via which an uninterruptible direct current supply is provided via a downstream DC/DC conversion (173) to at least one connection pin or one connection socket, for example the connection pin/connection socket 1, on the coupling terminal (KoAn).

6. Multi-beam shape auxiliary device according to claim 5, **characterised in that** the power supply circuit (171) comprises or consists of a diode circuit, via which the detection lines (161) provided for each primary terminal (A1, A2, A3) are connected to the DC/DC converter (173) via a separate diode line (171').

7. Multi-beam shape auxiliary device according to any of claims 1 to 6, **characterised in that** there is a connection from each primary terminal (A1, A2, A3) via at least one or via at least two connection pins or connection sockets provided therein, for example the connection pin/connection socket 1 and/or 6, via a downstream diode line (155a, 155b) in each case, to a detection line (161) assigned to the respective primary terminal (A1, A2, A3).

8. Multi-beam shape auxiliary device according to any of claims 1 to 7, **characterised in that** an active power supply means (AVE) is provided for ensuring the active power supply for actions in the active power range based on information transmitted via the coupling terminal (KoAn).

9. Multi-beam shape auxiliary device according to claim 8, **characterised in that** the active power supply means (AVE) comprises a power two-way switch (167), which establishes a connection from each of the plurality of detection lines (161) to an energy supply line (169) which is connected to at least one power supply connection pin or one power supply connection socket, for example the power supply connection pin or power supply connection socket 6, or to at least one of two power supply terminals, for example to at least one of the two power supply terminals 1, 6, at the coupling terminal (KoAn).

10. Multi-beam shape auxiliary device according to either claim 8 or claim 9, **characterised in that** the active power supply means (AVE) is connected to the communications modem (183), specifically to the inputs of the communications modem (183) which are provided therefor and to which the detection lines (161), which are connected to the respective primary terminals (A1, A2, A3), are connected, in such a way that, depending on whether and to which primary terminal (A1, A2, A3) a primary is connected, signalling is emitted via a single-wire connection (183') proceeding from the communications modem (183) to a connection pin or connection socket on the coupling terminal side, for example to the connection pin or the connection socket 3.

11. Device which comprises a multi-beam shape control device (M-RET) and a multi-beam shape auxiliary device according to any of claims 1 to 10 which is connected thereto, wherein the multi-beam shape control device comprises a communications modem (61) in order, on one hand, to receive the signals present at the plurality of primary terminals (A1, A2, A3) and, vice versa, to transmit signals transmitted by the multi-beam shape control device (M-RET) to the primary terminals (A1, A2, A3), for which purpose the communications modem (61) is designed such that the frequency-modulated signals which are present at the coupling terminal (KoAn) and are converted by the multi-beam shape auxiliary device are demodulated and are supplied in the form of TTL signals via a bus (61') to at least one microprocessor (21, 21a, 21 b) of the multi-beam shape control device (M-RET), the communications modem (61) being further designed such that frequency-modulated signals are generated which are present at the coupling terminal (KoAn) for the conversion by the multi-beam shape auxiliary device into differential communication signals.

12. Device according to claim 11, **characterised in that** the multi-beam shape control device (M-RET) comprises a detection modem (77), which is configured such that it transmits a detection signal, received from the primary or secondary terminal (13, 113) via at least one connection pin or connection socket 5 provided therein, via which primary terminal (A1, A2, A3) an active power supply can always be provided, to a microprocessor (21) or to at least one of a plurality of microprocessors (21; 21a, 21 b), from which a signal can be emitted to the site-sharing adapter (A) via a control line (83) in order to actuate the power two-way switch (167) of the active power supply means (AVE).

13. Device according to either claim 11 or claim 12, **characterised in that** at least two connection pins or sockets, for example the two connection pins or sockets 1, 6, are provided on the primary or secondary terminal (13, 113), the standby DC supply being provided via one connection pin or connection socket, for example the connection pin or the connection socket 1, and the active power supply being provided via the other terminal.

14. Device according to claim 13, **characterised in that** the two connection pins or sockets, for example the connection pins or connection sockets 1, 6, via which on one hand the standby power and on the other hand the active power supply are supplied to the primary or secondary terminal (13, 113), are in each case connected via a diode line (55a, 55b) and/or via a downstream star point (57) to an energy supply means (19) in the multi-beam shape control device (19).

15. Device according to any of claims 11 to 14, **characterised in that** the communications modem (61) is designed such that signals which are present at the primary terminals (A1, A2, A3) or at the communications terminal (3) of the primary or secondary terminal (13, 113) are supplied to the microprocessor (21; 21a, 21 b).

16. Device according to any of claims 11 to 15, **characterised in that** the multi-beam shape control device is constructed such that a control signal for the active power supply means (AVE) and the associated power two-way switch (167) is generated as a function of a command, which is transmitted by a communications modem and detected by the microprocessor (21; 21a, 21 b), in order to switch the power two-way switch (167).

## Revendications

1. Dispositif auxiliaire à rayons multiples destiné à raccorder un port de communication optique (13, 113) primaire ou secondaire d'un dispositif de commande à plusieurs rayons (M-RET), notamment pour un système d'antenne de téléphonie mobile, avec les caractéristiques suivantes :
- le dispositif auxiliaire à rayons multiples comprend un adaptateur « site-sharing » (A) sous la forme d'un adaptateur principal (PA), lequel est prévu au niveau du raccord de couplage (KoAn) correspondant avec une configuration de connexion femelle (FK) ou mâle (MK), ou sous la forme d'un adaptateur secondaire (SA), lequel est prévu au niveau du raccord de couplage (KoAn) correspondant avec une configuration de connexion mâle (MK) ou femelle (FK),
- l'adaptateur « site-sharing » (A) présente au moins deux connexions principales (A1, A2, A3) destinées à connecter au moins deux éléments de commande principaux,
- la configuration prise mâle et/ou connexion ou l'affectation des broches au niveau des connexions principales (A1, A2, A3) est compatible avec la configuration des connexions ou l'affectation des broches du raccord de couplage (KoAn) de l'adaptateur « site-sharing » (A),
- les bornes de connexion ou les douilles de connexion prévues pour la transmission bidirectionnelle du signal dans l'adaptateur « site-sharing » (A), par exemple les bornes/douilles 3, 5 au niveau des deux connexions principales (A1, A2, A3) au moins sont reliées à une borne ou à une douille de connexion prévue pour la transmission bidirectionnelle du signal, par exemple la borne/la douille de connexion 3, du raccord de couplage (KoAn) afin de former un canal pour la transmission bidirectionnelle du signal,
- le canal pour la transmission bidirectionnelle est conçu de sorte que les signaux de communication différentiels émis au niveau des deux connexions principales (A1, A2, A3) au moins sont convertis en signaux à modulation de fréquence, lesquels apparaissent au niveau du raccord de couplage (KoAn), les signaux à modulation de fréquence apparaissant au niveau du raccord de couplage (KoAn) étant à l'inverse convertis en signaux de communication différentiels, lesquels apparaissent au niveau des bornes ou des douilles de connexion 3, 5 concernées d'une connexion principale (A1, A2, A3) correspondante.

2. Dispositif auxiliaire à rayons multiples selon la revendication 1, **caractérisé en ce que** les deux bornes ou douilles de connexion prévues pour la communication du signal, par exemple les bornes/douilles 3, 5, de chaque connexion principale (A1, A2, A3) sont reliées à un récepteur-émetteur de communication (181), lequel est conçu de sorte que les signaux de communication différentiels émis au niveau de la connexion principale (A1, A2, A3) correspondante sont convertis en signaux TTL et, à l'inverse, les signaux TTL émis au niveau du récepteur-émetteur de communication (181) sont convertis en signaux de communication différentiels, lesquels apparaissent au niveau de la connexion principale (A1, A2, A3) correspondante.

3. Dispositif auxiliaire à rayons multiples selon la revendication 1 ou 2, **caractérisé en ce qu'**un modem de communication (183) est en outre prévu, lequel est relié, d'une part, via une ligne de communication ayant la forme d'une liaison monoconductrice (183') à une borne ou à une douille de connexion 3 correspondante au niveau du raccord de couplage (KoAn) et, d'autre part, via une ligne ou un bus séparés (181') avec les récepteurs-émetteurs de communication (181), lesquels sont reliés à chaque connexion principale (A1, A2, A3) qui leur est affectée.

4. Dispositif auxiliaire à rayons multiples selon l'une quelconque des revendications 1 à 3, **caractérisé en ce qu'**un système d'alimentation de veille (SVE) est prévu dans l'adaptateur « site-sharing », lequel système est conçu de sorte qu'une alimentation en courant continu ininterrompue d'une ou plusieurs connexions principales (A1, A2, A3) est connectée à une borne ou à une douille de connexion, par exemple la borne/douille de connexion 1, du côté du raccord de couplage (KoAn).

5. Dispositif auxiliaire à rayons multiples selon la revendication 4, **caractérisé en ce que** le système d'alimentation de veille (SVE) comporte pour chaque connexion principale (A1, A2, A3) une liaison électrique vers une ligne de détection (161) correspondante, laquelle est connectée à un circuit d'alimentation (171) de préférence sous la forme d'un circuit OU, sur lequel est installée une alimentation en courant continu ininterrompue, au niveau du raccord de couplage (KoAn), via une conversion courant continu/courant continu en aval (173) vers au moins une borne ou une douille de connexion, par exemple la borne/douille de connexion 1.

6. Dispositif auxiliaire à rayons multiples selon la revendication 5, **caractérisé en ce que** le circuit d'alimentation en courant (171) comprend un circuit à diode ou se compose d'un tel circuit, sur lequel les lignes de détection (161) prévues pour chaque connexion principale (A1, A2, A3) sont reliées via une ligne à diode (171') séparée avec une conversion courant continu/courant continu (173).

7. Dispositif auxiliaire à rayons multiples selon l'une quelconque des revendications 1 à 6, **caractérisé en ce qu'**il existe une liaison entre une connexion principale (A1, A2, A3) correspondante et une ligne de détection (161) affectée à une connexion principale (A1, A2, A3) correspondante via au moins une ou via au moins deux bornes ou deux douilles de connexion prévues ici, par exemple la borne/la douille de connexion 1 et/ou 6, via une ligne à diode (155a, 155b) en aval.

8. Dispositif auxiliaire à rayons multiples selon l'une quelconque des revendications 1 à 7, **caractérisé en ce qu'**un système d'alimentation en puissance active (AVE) est prévu pour protéger par des fusibles l'alimentation en puissance active pour des actions d'un champ d'action actif en fonction d'une information envoyée par le raccord de couplage (KoAn).

9. Dispositif auxiliaire à rayons multiples selon la revendication 8, **caractérisé en ce que** le système d'alimentation en puissance active (AVE) comprend un inverseur de courant de puissance (167), lequel établit une liaison entre une des lignes de détection (161) et un circuit d'alimentation en énergie (169), lequel est relié au niveau du raccord de couplage (KoAn) à au moins une borne ou une douille de connexion d'alimentation en tension, par exemple la borne ou la douille 6, ou à au moins une des deux connexions d'alimentation en tension, par exemple à au moins une des deux connexions d'alimentation en tension 1, 6.

10. Dispositif auxiliaire à rayons multiples selon la revendication 8 ou 9, **caractérisé en ce que** le système d'alimentation en puissance active (AVE) est raccordé au modem de communication (183), et **en ce que** au niveau des entrées prévues à cet effet du modem de communication (183), au niveau desquelles les lignes de détection (161), qui sont reliées aux connexions principales (A1, A2, A3) correspondantes, sont raccordées, de sorte que selon si une connexion principale est raccordée et au niveau de quelle connexion (A1, A2, A3), une signalisation est émise via une liaison monoconductrice (183') sortant du modem de communication (183) au niveau d'une borne ou d'une douille de connexion du côté du raccord de couplage, par exemple au niveau de la borne ou de la douille 3.

11. Dispositif qui comprend un dispositif auxiliaire à rayons multiples (M-RET) et un dispositif auxiliaire à rayons multiples qui lui est raccordé selon l'une quelconque des revendications 1 à 10, le dispositif de commande à rayons multiples comprenant un modem de communication (61), destiné à recevoir un des signaux émis au niveau des connexions principales (A1, A2, A3) ainsi que, à l'inverse, à envoyer des signaux émis par le dispositif auxiliaire à rayons multiples (M-RET) au niveau des connexions principales (A1, A2, A3), pour lequel le modem de communication (61) est conçu de sorte que les signaux à modulation de fréquence émis au niveau du raccord de couplage (KoAn) et convertis par le dispositif auxiliaire à rayons multiples sont démodulés et sont amenés sous forme de signaux TTL via un bus (61') au moins à un microprocesseur (21, 21a, 21b) du dispositif de commande à rayons multiples (M-RET), le modem de communication (61) étant en outre conçu de sorte que des signaux à modulation de fréquence, qui apparaissent au niveau du raccord de couplage (KoAn) pour être convertis en signaux de communication différentiels par le dispositif auxiliaire à rayons multiples, sont générés.

12. Dispositif selon la revendication 11, **caractérisé en ce que** le dispositif de commande à rayons multiples (M-RET) comprend un modem de détection (77), lequel est conçu de sorte qu'il transmet un signal de détection reçu par une connexion principale ou secondaire (13, 113) via au moins une borne ou une douille de connexion 5 prévue ici, signal via la connexion principale (A1, A2, A3) duquel une alimentation en puissance active peut par principe avoir lieu, au niveau d'un microprocesseur (21) ou au niveau au moins d'un parmi plusieurs microprocesseurs (21 ; 21a, 21b), par lequel un signal est envoyé via une ligne pilote (83) à l'adaptateur « site-sharing » pour actionner l'inverseur de courant de puissance (167) du dispositif d'alimentation en puissance active (AVE).

13. Dispositif selon la revendication 11 ou 12, **caractérisé en ce que** au moins deux bornes ou douilles de connexion, par exemple les deux bornes ou douilles de connexion 1, 6, sont prévues au niveau de la connexion principale ou secondaire (13, 113), l'alimentation en courant continu de veille étant conduite via une borne ou une douille de connexion, par exemple la borne ou la douille 1, et l'alimentation en puissance active étant conduite via l'autre connexion.

14. Dispositif selon la revendication 13, **caractérisé en ce que** les deux bornes ou douilles de connexion, par exemple les bornes ou les douilles 1, 6, via lesquelles, d'une part, la puissance de veille et, d'autre part, l'alimentation en puissance active sont introduites dans la connexion principale ou secondaire (13, 113), sont reliées à un dispositif d'alimentation en énergie (19) dans le dispositif de commande à plusieurs rayons (19) via une ligne à diode (55a, 55b) et/ou un point neutre (57) secondaire.

15. Dispositif selon l'une quelconque des revendications 11 à 14, **caractérisé en ce que** le modem de communication (61) est conçu de sorte que des signaux sont amenés au microprocesseur (21 ; 21a, 21b), lesquels signaux apparaissent au niveau des connexions principales (A1, A2, A3) ou au niveau du port de communication (3) de la connexion principale ou secondaire (13, 113).

16. Dispositif selon l'une quelconque des revendications 11 à 16, **caractérisé en ce que** le dispositif de commande à plusieurs rayons est conçu de sorte qu'un signal de commande est généré pour le dispositif d'alimentation en puissance active (AVE) et l'inverseur de courant de puissance (167) en fonction d'une commande transmise par un modem de communication et détectée par un microprocesseur (21 ; 21a, 21 b) pour commuter l'inverseur de courant de puissance (167).
